# EUROPEAN PATENT SPECIFICATION

(11) **EP 2 343 216 B1**
(45) Date of publication and mention of the grant of the patent: **31.07.2013**
(21) Application number: 09817843.7
(22) Date of filing: 30.09.2009
(51) Int. Cl.: B60R 7/10, A47G 29/00, F16F 1/12

(54) **OPERATION MECHANISM FOR MOVABLE BODY**
BETRIEBSMECHANISMUS FÜR EINEN BEWEGLICHEN KÖRPER
MÉCANISME FONCTIONNEL DESTINÉ À UN CORPS MOBILE

(30) Priority: 30.09.2008 JP 2008253324; 22.12.2008 JP 2008326568; 31.07.2009 JP 2009179904
(43) Date of publication of application: 13.07.2011
(73) Proprietor: Nifco INC., Yokohama-shi, Kanagawa 244-8522 (JP)
(72) Inventor: NEMOTO, Takehiko, Yokohama-shi Kanagawa 244-8522 (JP)
(74) Representative: Dreiss
(86) International application number: PCT/JP2009/067101
(87) International publication number: WO 2010/038811

(56) References cited:
- JP-A- 2003 127 744
- JP-A- 2004 183 736
- JP-A- 2006 193 883
- JP-A- 2008 029 367
- JP-U- 3 086 853
- JP-U- 3 142 083
- JP-U- 7 017 655
- JP-U- 7 037 812
- US-A- 4 688 695

## Description

### Technical Field

The present invention relates to an operational mechanism for a movable body which may be opened and closed, such as a hook or the like.

### Related Art

In a vehicle inner space, a claw shaped (substantially "L" shaped) hook is provided projecting towards a vehicle inner side and is used to support clothing, bags, and the like. However, the hook may be an obstacle when it is not being used, since it projects towards a vehicle inner side.

To address the above, in Japanese Patent Application Laid-Open (JP-A) No. 2006-35994, a hook and a case storing the hook are linked by a biasing means, and the hook is biased in a storage direction towards the case. When the hook is used, a finger or the like is used to apply resistance to a biasing force of the biasing means and pull the hook out of the case such that it projects towards a vehicle inner side, and when the finger or the like is released, the hook is stored in the case by the biasing force of the biasing means.

In Japanese Patent Application Laid-Open (JP-A) No. 2006-193883, which compounds to the preamble of claim 1, an opening provided to a main body may be opened and closed by a cover. Outer gears are provided to the cover, and move integrally with the cover. A fixed member is fixed to the main body, and a rotating gear is rotatably attached to the fixed member. The rotating gear engages with a damper gear, and since the damper gear engages with the outer gear, when the cover moves, the rotating gear rotates via the outer gear and damper gear.

Further, a cam groove is formed in the fixed member and a pin is slidably inserted in the cam groove. Depending on the position of the pin, a biasing force of a spring member provided between the main body and the rotating gear changes. As a result, when the door is fully open, a biasing force of the spring member acts upon the door to move it towards a closing direction.

### Prior Art Document

Japanese Patent Application Laid-Open (JP-A) No. 2006-35994
Japanese Patent Application Laid-Open (JP-A) No. 2006-193883

### SUMMARY OF THE INVENTION

### Subjects to be addressed by the invention

Subject of the present invention is to provide an operational mechanism for a movable body in which the movable body can be automatically returned to a closed position following the movable body being in an open state.

### Measures for addressing the subjects

This is solved with an operational mechanism for a movable body having the features of claim 1.
Further embodiments of the invention are defined by the depending claims.

### Advantageous effect of the invention

Since the present invention is configured as described above, following the movable body being in an open state (projecting position), the movable body can be automatically returned to a closed position (reference position).

### BRIEF DESCRIPTION OF THE DRAWINGS

Fig. 1 is a perspective view showing a closed position of the hook member of the hook device of the first embodiment;
Fig. 2 is a perspective view showing an open position of the hook member of the hook device of the first embodiment;
Fig. 3 is an exploded perspective view showing the hook device of the first embodiment;
Fig. 4A is a sectional view taken along line 4A-4A of Fig. 1, and Fig. 4B is a sectional view corresponding to Fig. 4A, showing the hook member moved to an engaged position;
Fig. 5A is a sectional view taken along line 5A-5A in Fig. 1, and Fig. 5B is a sectional view corresponding to Fig. 4A, showing the hook member moved to an engaged position;
Figs. 6A and 6B are sectional views taken along line 6A-6A of Fig. 2, and show a change in biasing position of a reversing spring;
Fig. 7 is an exploded perspective view showing a hook device according to a second embodiment;
Fig. 8A is a sectional view taken along line 8A-8A of Fig. 7, Fig. 8B is a sectional view taken along line 8B-8B of Fig. 7, and Fig. 8C is a sectional view taken along line 8C-8C of Fig. 7;
Figs. 9A and 9B are sectional views of the hook device corresponding to the section taken along line 8C-8C of Fig. 7, and showing pushed-in operations similar to Fig. 4A and Fig. 4B, respectively.
Fig. 10A and 10B are sectional views of the hook device corresponding to the section taken along line 8A-8A of Fig. 7, and are showing pushed-in operations similar to Fig. 5A and Fig. 5B, respectively.
Fig. 11A and 11B are sectional views of the hook device corresponding to the section taken along line 8A-8A of Fig. 7, and are showing a change in biasing position of a reversing spring similar to Fig. 6A and Fig. 6B, respectively.
Fig. 12A and 12B are sectional views of the hook device corresponding to the section taken along line 8B-8B of Fig. 7, and are showing the hook member moved to an engaged position similar to Fig. 4A and Fig. 4B, respectively.
Fig. 13 is an exploded perspective view showing a hook device according to a third embodiment.
Fig. 14A is a sectional view showing the hook member in a closed position, and Fig. 14B is a sectional view showing the hook device moved to an engaged position.
Fig. 15A and 15B are sectional views showing the hook member in an open position, and show a change in biasing position of a reversing spring.
Fig. 16 is an exploded perspective view showing a hook device of the fourth exemplary embodiment;
Fig. 17A is a sectional view taken along line A-A of Fig. 16 showing the closed position of a hook member, Fig. 17B is a sectional view taken along line A-A of Fig. 16 showing the engaged position of the hook member, and show a change in biasing position of a reversing spring;
Figs. 18A and 18B are sectional views taken along line B-B of Fig. 16 corresponding to the operations of Figs. 17A and 17B, respectively, and show the relation between a cam groove and a trace portion;
Fig. 19A is a sectional view taken along line A-A of Fig. 16 showing the state that the hook member stops moving, Fig. 19B is a sectional view taken along line A-A of Fig. 16 showing the state that the hook member is moved to the open position, and show a change in biasing position of the reversing spring;
Figs. 20A and 20B are sectional views taken along line B-B of Fig. 16 corresponding to the operations of Figs. 19A and 19B, respectively, and show the relation between a cam groove and a trace portion;
Fig. 21A is a sectional view taken along line A-A of Fig. 16 showing the state that the hook member is moved in the closing direction, Fig. 21B is a sectional view taken along line A-A of Fig. 16 showing the closed position of the hook member, and show a change in biasing position of the reversing spring;

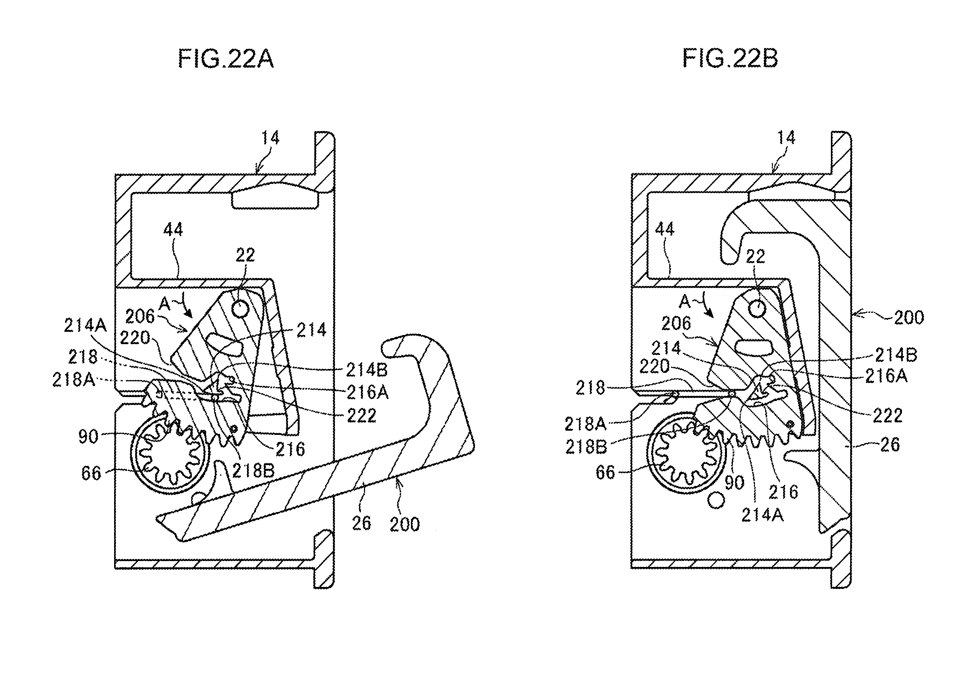

Figs. 22A and 22B are sectional views taken along line B-B of Fig. 16 corresponding to the operations of Figs. 21A and 21B, respectively, and show the relation between a cam groove and a trace portion;
Fig. 23 is an exploded perspective view showing a hook device of the fifth exemplary embodiment;
Fig. 24A is a sectional view showing the closed position of a hook member, Fig. 24B is a sectional view showing the hook member moved to the engaged position, and show a change in biasing position of a reversing spring and the relation between a cam groove and a trace portion;
Fig. 25A is a sectional view showing the state that the hook member stops moving, Fig. 25B is a sectional view showing the state that the hook member is moved to the open position, and show a change in biasing position of the reversing spring and the relation between a cam groove and a trace portion;

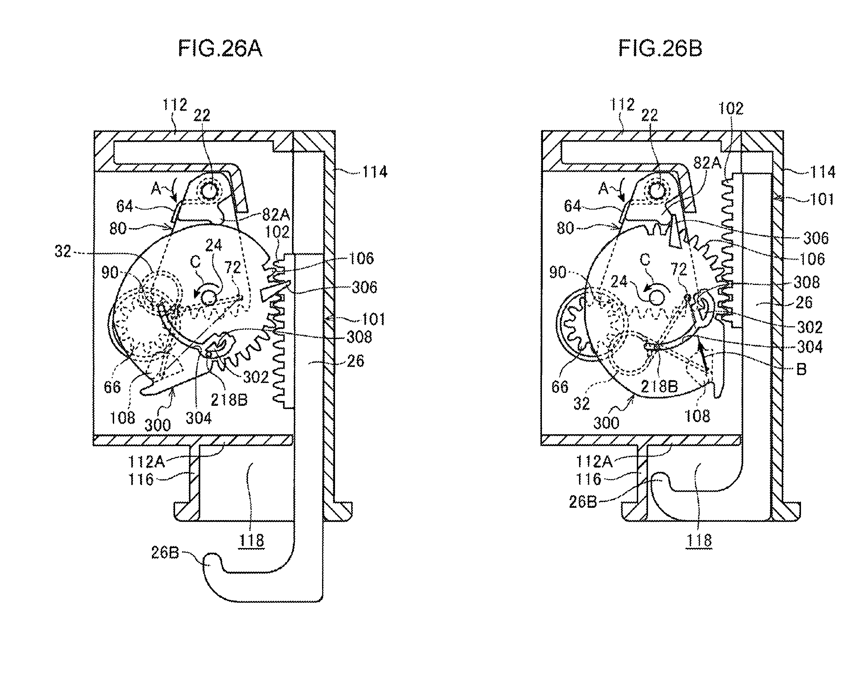

Fig. 26A is a sectional view showing the state that the hook member is moved in the closing direction, Fig. 26B is a sectional view showing the closed position of the hook member, and show a change in biasing position of the reversing spring and the relation between a cam groove and a trace portion;
Fig. 27 is a perspective view showing the closed position of the hook member of the hook device of the sixth exemplary embodiment;
Fig. 28 is a perspective view showing the open position of a hook member of a hook device of the sixth exemplary embodiment;
Fig. 29 is an exploded perspective view seen from the front side of the hook device of the sixth exemplary embodiment;
Fig. 30 is an exploded perspective view seen from the back side of the hook device of the sixth exemplary embodiment;
Fig. 31A is a sectional view taken along line 31A-31A of Fig. 27, and Fig. 31B is a sectional view corresponding to Fig. 31A showing the hook member moved to the engaged position;
Fig. 32A is a sectional view taken along line 32A-32A of Fig. 27, and Fig. 32B is a sectional view corresponding to Fig. 32A showing the hook member moved to the engaged position;
Fig. 33A is a sectional view taken along line 33A-33A of Fig. 28 and shows the state that the hook member is moved to the open position, and Fig. 33B shows the state immediately before the hook member is returned to the closed position; and
Fig. 34A is a sectional view taken along line 34A-34A of Fig. 28 and shows the state that the hook member is moved to the open position, and Fig. 33B shows the state immediately before the hook member is returned to the closed position.

### DESCRIPTION OF EMBODIMENTS

The mechanism of operation of the hook member as a moving body (hook device) according to the present embodiment will now be explained.

### First Embodiment

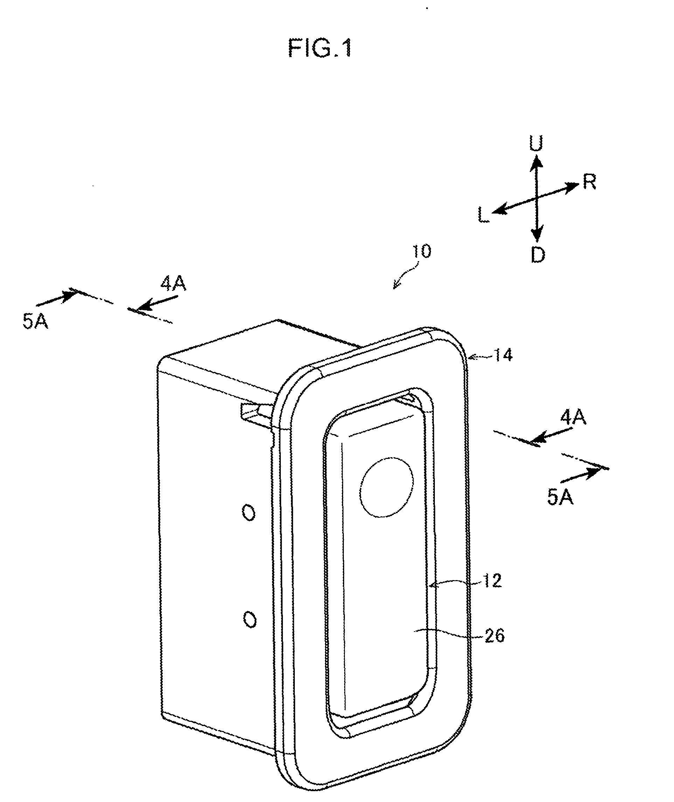

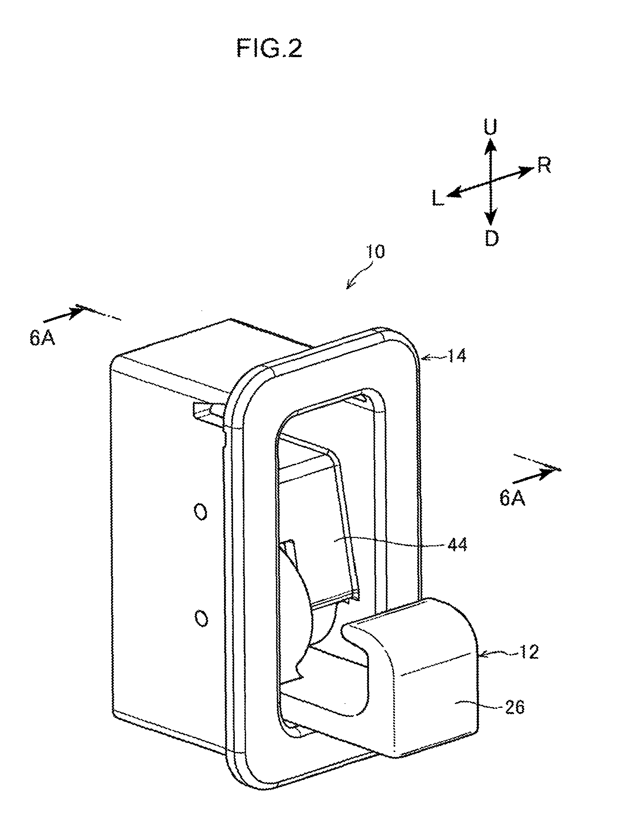

In the first embodiment, a hook device 10 shown in Figs. 1-3 is provided at a vehicle body panel or the like, and a hook member (movable body) 12 thereof faces an interior space and may be opened and closed. For ease of explanation, the orientation of hook device 10 in Figs. 1-3 is made a reference orientation, and up, down, left and right directions (indicated as U, D, L and R, respectively) are as shown in these figures.

Hook device 10 is provided with a box shaped case (support body) 14, which may house hook member 12 therein. A flange portion 16 extends from an end surface of a side wall of the case 14 towards an outer side, around the entire periphery of the case 14. Upper and lower axial support holes 18 and 20 are provided at the side wall in a length direction of the case 14, and shafts 22 and 24 are respectively fixed in the axial support holes 18 and 20.

Hook member 12 includes a hook portion 26, a leading end side of which bends in a hook shape, and a substantially cylinder-shaped drum portion 28 provided at an inner surface of a rear end side of hook portion 26, which is a center of rotation for opening and closing of hook member 12.

A dome-shaped recess portion 26A is formed at an outer surface of the leading end side of the hook portion 26, and functions as a marker when pushing the hook member 12, and also facilitates touching with a finger. A reversed portion 26B is provided at a leading end portion of hook portion 26, which reverses the leading end portion of hook portion 26 towards a drum portion 28 side, and which prevents clothing or the like caught by hook portion 26 from readily falling. An attachment portion 30 is provided at a rear end side of hook portion 26, to which may be attached an end portion of reversing spring (biasing member) 32, which is provided with a torsion portion 32A at a center portion thereof.

Plural inset portions 34 are inset into the surface of drum portion 28, such that the surface of drum portion 28 does not deform after the formation of hook member 12. An axial hole 36 is formed at a center portion of drum portion 28, into which shaft 24 may be inserted, such that drum portion 28 may rotate with respect to shaft 24. Thereby, hook member 12 may rotate around shaft 24 via drum portion 28.

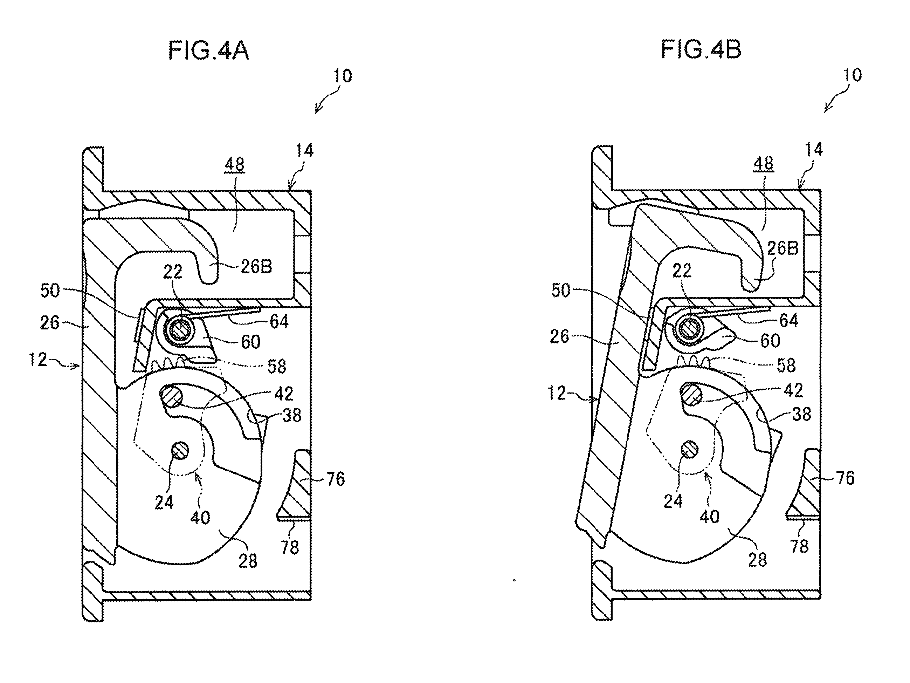

An engaging groove 38 (see Fig. 4A) is provided at the right side of drum portion 28, and a pin (pushing portion) 42 provided with a first gear member (small-diameter gear member) 40, to be explained later, may engage therewith.

A cover portion 44 is provided in case 14, which conceals each element housed in case 14, such that each element is not exposed when hook member 12 is in an open state. As a result, hook device 10 is made more attractive, and each element may be protected from dust and the like.

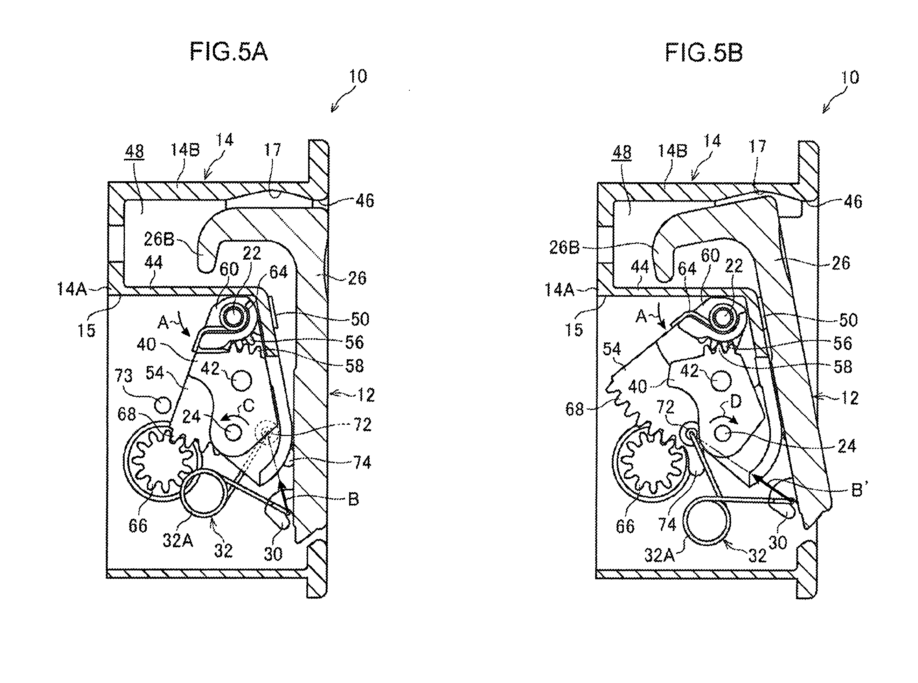

As shown in Fig. 5A, at a central upper portion of case 14, cover portion 44 as seen in cross-section extends in a horizontal direction from a base portion 14A (an opening 15 is partially formed in base portion 14A to avoid interference with reversing spring 32) of case 14, and a leading end portion of cover portion 44 bends and inclines downwards towards an opening portion 46 side of case 14.

At an upper portion of case 14, a space 48 is provided between an inner surface of upper wall 14B of case 14 and cover portion 44, and, as shown in Fig. 5A, when hook member 12 is in a closed state (that is, at a closed position (reference position) of hook member 12), the leading end portion of hook portion 26 may be housed in space 48.

When hook member 12 is in a closed state, hook member 12 may rotate (move) around shaft 24 in a pushing-in direction toward the inside of case 14, as shown in Fig. 5B, and hook member 12 may be rotated until the movement of hook portion 26 is limited by contacting cover portion 44 (until it reaches a pushed-in position /predetermined position, same as hereinafter).

A cushion 50 made of a rubber material or the like is fixed to the surface of cover portion 44 such that hook portion 26 may contact therewith. As a result, hook portion 26 contacts cover portion 44 via cushion 50, which absorbs the impact of hook portion 26 at a time of contact.

When hook portion 26 contacts cover portion 44 via cushion 50, a leading end portion of hook portion 26 describes an arc-shaped movement locus around shaft 24. An inset portion 17 is formed at an inner surface of upper wall 14B of case 14, such that the leading end portion of hook portion 26 does not interfere with an inner wall of case 14, or cover portion 44.

A first gear member 40 is rotatably provided and axially supported at shaft 24. At first gear member 40 is formed an axial hole 52 into which shaft 24 may be inserted, an engaging pin 42 that engages with engaging groove 38 formed in drum portion 28, and a gear portion 58 (first gear) that engages with a gear portion 56 (second gear/small diameter gear) provided to a second gear member 54 (large diameter gear member) which is described below. Gear portion 58 and axial hole 52 are arranged on opposite sides with respect to engaging pin 42.

As shown in Fig. 4A, when hook member 12 is in a closed position, engaging pin 42 of first gear member 40 contacts an end of engaging groove 38 of drum portion 28. As shown in Fig. 4B, when hook member 12 is pushed in a pushing-in direction, engaging pin 42 is pushed by the end of engaging groove 38. As a result, first gear member 40 rotates around shaft 24.

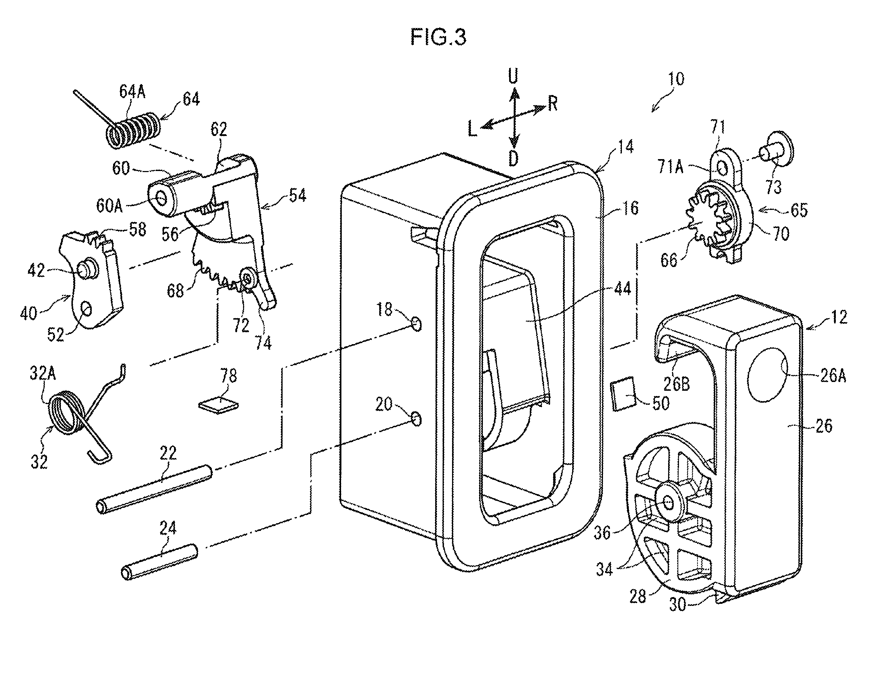

As shown in Figs. 5A and 5B, second gear member 54 is rotatably supported at shaft 22. As shown in Fig. 3, cylinder-shaped axial portion 60 is provided at gear member 54, and shaft 22 is inserted into axial hole 60A formed in a center portion of axial portion 60.

A housing portion 62 is formed at a central portion in a length direction of axial portion 60, which can house a torsion coil spring 64. Shaft 22 is inserted into a coil portion 64A of torsion coil spring 64. an end portion of torsion coil spring 64 contacts second gear member 54, and the other end portion is fixed to a case 14 side, and as shown in Fig. 5A, torsion coil spring 64 biases second gear member 54 in the direction of arrow A (a direction that releases hook member 12).

In the vicinity of axial portion 60 of gear member 54 is formed gear portion 56 that engages with gear portion 58 of first gear member 40. A gear portion 68 (third gear/large-diameter gear) that engages with a damping gear 66 described below is formed at a free end of second gear member 54.

Due to the rotation of hook member 12, when first gear member 40 rotates, gear portion 56 rotates via gear portion 58 of first gear member 40, and second gear member 54 provided with gear portion 56 rotates around shaft 22. As a result, damping gear 66, which engages with gear portion 68 of second gear member 54, also rotates.

Damping gear 66 forms part of a damping unit 65, and is attached to a cylinder-shaped housing 70. Housing 70 is filled with a viscous liquid such as silicon oil or the like, and when damping gear 66 is regularly or reversely rotated, a viscous resistance is generated due to the viscous liquid. As a result, a damping effect due to the viscous resistance acts upon second gear member 54 via gear portion 68, and second gear member 54 rotates quietly.

A fixing piece 71 extends from an outer peripheral surface of housing 70, and a fixing pin 73 is inserted at a fixing hole 71A provided at fixing piece 71, and damping unit 65 is fixed to case 14 via fixing pin 73.

Thus, by fixing damping unit 65 at a single position of the outer peripheral surface of housing 70, damping unit 65 may rotate around fixing pin 73. As a result, a clearance between gear portion 68 and damping gear 66 may be set by adjusting a constrictive force of fixing pin 73.

At a case 14 opening portion 46 side of gear portion 68, attachment portion 72 is provided, to which the other end of reversing spring 32 is attached. The one end of reversing spring 32, as described above, is attached to attachment portion 30 provided at the rear end side of hook member 12, and, as shown in Fig. 5A, when hook member 12 is in a closed position, both end portions of reversing spring 32 are biased towards a direction so as to mutually approach.

An extending piece 74 is provided extending from attachment portion 72 of second gear member 54 towards a case 14 opening portion 46 side, which may contact with an inner surface of hook member 12 when hook member 12 is in a closed state.

### Operation of the Hook Member

As shown in Fig. 5A, when hook member 12 is at a closed position (reference position), attachment portion 30 of hook member 12 is positioned at a case 14 inner edge lower portion side of opening portion 46, and attachment portion 72 of second gear member 54 is at a position above with respect to attachment portion 30 and inclined towards the inside of case 14. The ends of reversing spring 32 are attached to attachment portion 30 and attachment portion 72, respectively, and both end portions of reversing spring 32 are biased towards a direction of mutually approaching (and elastic energy is stored).

Here, gear portion 68 of second gear member 54 engages with damping gear 66, and due to viscous resistance by damping gear 66, the movement of second gear member 54 is regulated up to a predetermined stress value. In contrast with this, when hook member 12 is in a closed position, there is no regulation of movement of hook member 12 by a movement regulating member such as a stopper or the like.

Reversing spring 32 is attached to hook member 12 and second gear member 54, and one end thereof (attachment portion 30 of hook member 12) moves more readily than another end thereof (attachment portion 72 of second gear member 54). As a result, a biasing force of reversing spring 32 acts in the direction of arrow B.

Since the center of rotation of hook member 12 is shaft 24, due to the biasing force of reversing spring 32, a moment centered on shaft 24 acts upon hook member 12 in the direction of arrow C (a closing direction of hook member 12). Meanwhile, the one end portion of torsion coil spring 64 contacts second gear member 54 and biases second gear member 54 in the direction of arrow A (an opening direction of hook member 12).

As a result, when hook member 12 is at a closed position, a stress in a closing direction of hook member 12 and a stress in an opening direction of hook member 12 are set to counterbalance, and hook member 12 is maintained in a closed state.

When hook member 12 is pushed from a closed position, as shown in Fig. 4A, towards a pushed-in position (predetermined position) as shown in Fig. 4B, engaging pin 42 of first gear member 40 is pushed by the end of engaging groove 38 of drum portion 28, and first gear member 40 rotates around shaft 22.

As shown in Figs. 5A and 5B, as a result of the rotation of first gear member 40, gear portion 56 rotates via gear portion 58 of first gear member 40, and second gear member 54 having gear portion 56 rotates around shaft 22. As a result, torsion coil spring 64 is biased in a resistance direction with respect to the biasing force thereof (an opening direction of hook member 12), and elastic energy is stored therein.

As a result of the rotation of second gear member 54, attachment portion 72 moves inwards with respect to shaft 24. As a result, in addition to further elastic energy being stored in reversing spring 32, the biasing force thereof acts in the direction of arrow B'. As a result, a moment centered around shaft 24 acts upon hook member 12 in the direction of arrow D (an opening direction of hook member 12).

Since gear portion 56 of second gear member 54 engages with damping gear 66, and the movement of second gear member 54 is regulated up to the predetermined stress value, a biasing force of reversing spring 32 acts upon hook member 12 before a biasing force of torsion coil spring 64 does.

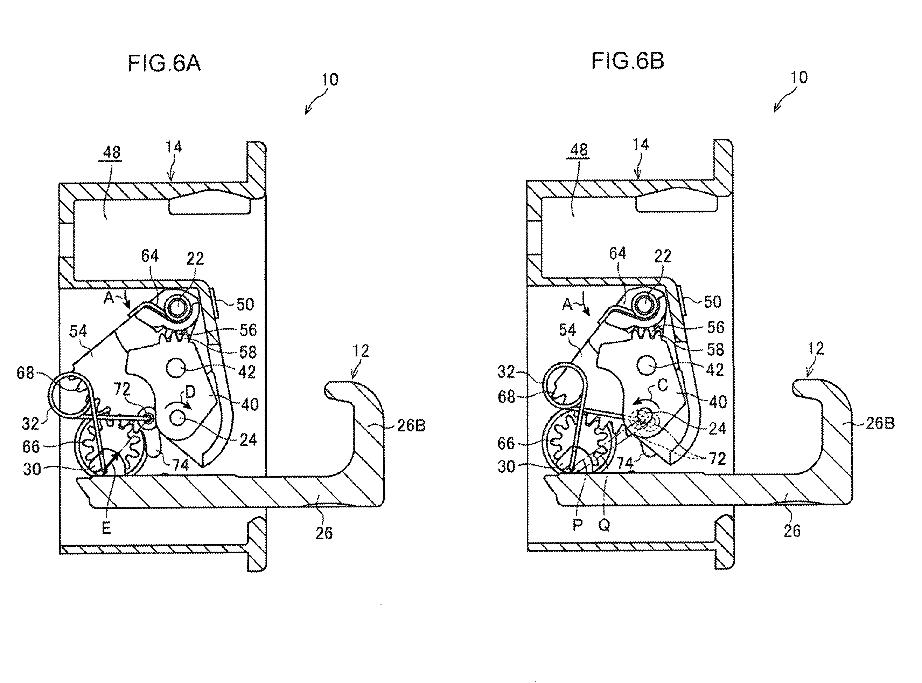

In other words, due to a biasing force of reversing spring 32, the one end of reversing spring 32 (attachment portion 30 of hook member 12) is pulled towards a side of the other end of reversing spring 32 (attachment portion 72 of second gear member 54), and accordingly, as shown in Fig. 6A, hook member 12 rotates in an opening direction.

A stopper 76 is provided in case 14 (see Fig. 4A), and a cushion 78 made of a rubber material is fixed at a lower surface of stopper 76. When hook member 12 opens, the hook member 12 contacts cushion 78, and an impact of hook member 12 is absorbed by cushion 78 at a time of contact therewith.

When hook member 12 opens (hook member 12 is at an open position or a protruding position thereof), hook member 12 is provided at substantially horizontal position, and clothing or the like may be caught on hook portion 26. At this time, the one end of reversing spring 32 (attachment portion 30 of hook 12) is disposed below and at an angle towards the inside of case 14 with respect to the other end of reversing spring 32 (attachment portion 72 of second gear member 54).

When hook member 12 is at an open position, similar to when it is at a closed position, both ends of reversing spring 32 are biased in a direction so as to mutually approach. As a result, the biasing force of reversing spring 32 acts in the direction of arrow E. Therefore, a moment acts upon hook member 12 in the direction of arrow D (an opening direction of hook member 12), centered around shaft 24

As stated above, in this state, elastic energy acting a direction that opens hook member 12 is stored in torsion coil spring 64. As a result, due to a biasing force of torsion coil spring 64, second gear member 54 rotates gradually around shaft 22.

Due to the rotation of second gear member 54, the direction in which the biasing force obtained from reversing spring 32 acts gradually shifts. Here, when second gear member 54 rotates around shaft 22, damping gear 66 rotates via gear portion 68. As a result, a damping force of damping gear 66 acts upon second gear member 54.

As shown in Fig. 6B, when a line of action (virtual line) P, that connects the one end of reversing spring 32 (attachment portion 30 of hook member 12) and the other end of reversing spring 32 (attachment portion 72 of second gear member 54), reaches a position at which it is superposed with shaft 24 of hook member 12, a moment centered around shaft 24 does not act upon hook member 12. As a result, hook member 12 is maintained in an opened state.

If, in this state, second gear member 54 rotates further in the direction of arrow A, line of action P of the biasing force of reversing spring 32 moves towards line of action Q, and a moment centered around shaft 24 acts upon hook member 12 in the direction of arrow C (a closing direction of hook member 12).

In other words, an action direction of a biasing force of reversing spring 32 (a biasing member) changes (bias direction switching mechanism) taking as a boundary at a position at which the line of action (virtual line) P of the biasing force of reversing spring 32 is superposed with shaft 24 of hook member 12, and a force towards a closing direction acts upon hook member 12 due to reversing spring 32, and hook member 12 is biased in a closing direction.

As a result, hook member 12 rotates in a closing direction, and second gear member 54 also rotates around shaft 22. Consequently, damping gear 66 rotates via gear portion 68, and a damping action of damping gear 66 acts upon second gear member 54. The damping action of damping gear 66 also acts upon hook member 12 via reversing spring 32, and hook member 12 rotates quietly.

Note that gear portion 68, which engages with damping gear 66, is provided at a free end side of second gear member 54, and gear portion 56, which engages with gear portion 58 of first gear member 40 is provided at a center of rotation side of second gear member 54, and the curvature radius of gear portion 68 is larger than the curvature radius of gear portion 56. In other words, the movement amount of gear portion 68 is larger than the movement amount of gear portion 56, such that a damping action that acts upon hook member 12 due to damping gear 66 acts for a long period of time.

As shown in Fig. 5A, when hook member 12 is in a closed position, extending piece 74 of second gear member 54 contacts an inner surface of hook member 12, and the movement of hook member 12 is regulated.

### ] Operation of Hook Member

As shown in Fig. 5A, in the present embodiment, one end of reversing spring 32 is attached to hook member 12, and the other end of reversing spring 32 is attached to second gear member 54. As shown in Fig. 5B, due to pushing of hook member 12 from a closed position, second gear member 54 rotates, and the position at which the biasing force of reversing spring 32 acts (a biasing position) changes with respect to the center of rotation (shaft 24) of hook member 12. As a result, rotational force that rotates hook member 12 towards an open position (see Fig. 5A) or a closed position (see Fig. 6A) is generated at reversing spring 32.

Specifically, one end of torsion coil spring 64 is attached to case 14, and the other end is attached to second gear member 54, and when hook member 12 is rotated towards a pushed-in position when torsion coil spring 64 is biasing second gear member 54 towards an opening direction of hook member 12, gear 54 is rotated, and elastic energy is stored in torsion coil spring 64.

At this time, elastic energy is also stored in reversing spring 32, and a biasing force of reversing spring 32 is used when hook member 12 is opened. When hook member 12 is in an open state, a biasing force of torsion coil spring 64 is used.

In other words, as shown in Fig. 6B, when the center of rotation of hook member 12 (shaft 24) is positioned on line of action P at which a biasing force of reversing spring 32 acts, a moment due to the biasing force of reversing spring 32 does not act upon hook member 12

However, when the center of rotation of hook member 12 is not on line of action P of the biasing force of reversing spring 32, if, for example, the center of rotation of hook member 12 is on line of action Q of the biasing force of reversing spring 32, a moment acts upon hook member 12 in the direction of arrow C due to a biasing force of reversing spring 32.

In this way, second gear member 54 is rotated by the biasing force of torsion coil spring 64, and by changing the biasing position of reversing spring 32 with respect to the center of rotation of hook member 12, the direction of the moment that acts upon hook member 12 can be changed, and a rotational force that rotates hook member 12 in an opening direction or a closing direction can be generated at reversing spring 32.

By changing the direction of a biasing force that acts upon hook member 12 by reversing spring 32, after opening hook member 12, hook member 12 may be automatically returned to a closed position following a predetermined period of time (when the biasing force that acts upon hook member 12 has changed). The predetermined period of time may be adjusted by adjusting the biasing force of torsion coil spring 64 or the damping force of damping gear 66.

For ease of explanation, the above description has assumed that the orientation of hook device 10 as shown in Figs. 1-3 is upward and downward directions. However, depending on the position of attachment and the like thereof, hook device 10 may be arranged with flange portion 16 of case 14 as an upper surface thereof, or with flange portion 16 as a lower surface thereof. In each case, the shape of hook portion 26 of hook member 12 may be changed accordingly.

In the present embodiment, the biasing position of reversing spring 32 with respect to the center of rotation (shaft 24) of hook member 12 changes, and a rotational force that rotates hook member 12 to a closed position (see Fig. 5A) or an open position (see Fig. 6A) is generated in reversing spring 32. However, the present invention is not limited to the above configuration.

### Second Embodiment

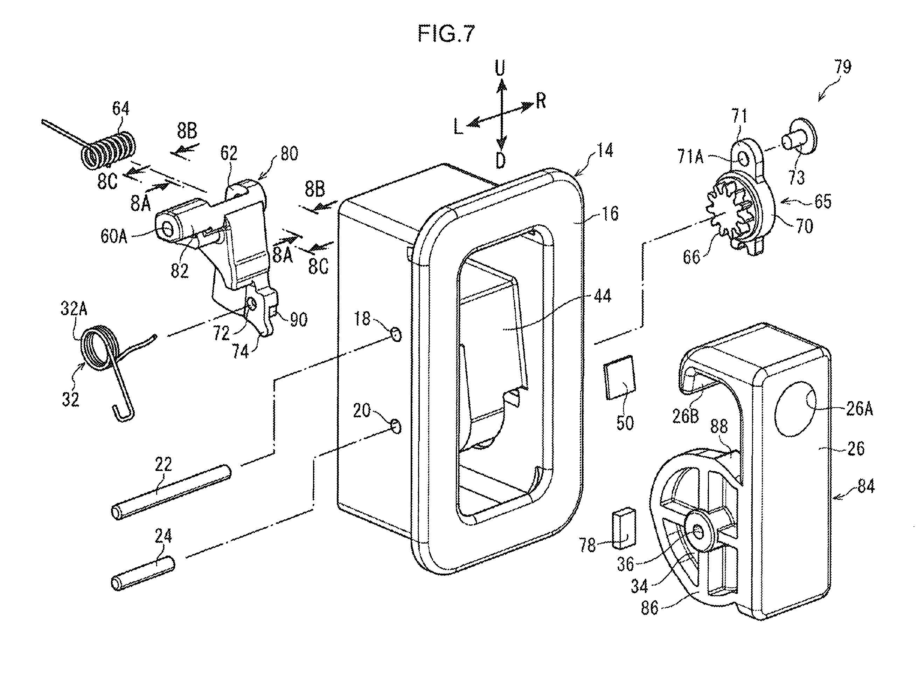

A second embodiment is shown in Fig. 7. In the first embodiment, gear members 40 and 54 are used to interlock with the operation of hook member 12. In the present embodiment, in a hook device 79, a rotating member 80 is used to interlock with the operation of hook member 12. Further, parts identical to those of the first embodiment are labeled with the same reference numerals, and detailed descriptions thereof are omitted.

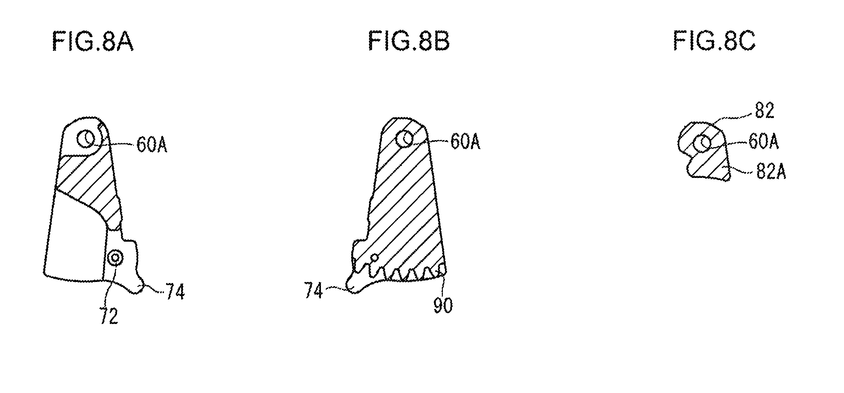

Figs. 8A-8C are sectional views of rotating member 80 corresponding to the lines of section shown in Fig. 7. As shown in Fig. 7, rotating member 80 is provided with an axial portion 82, which contacts with a projecting portion 88 provided at an upper portion of drum 86 of hook member 84.

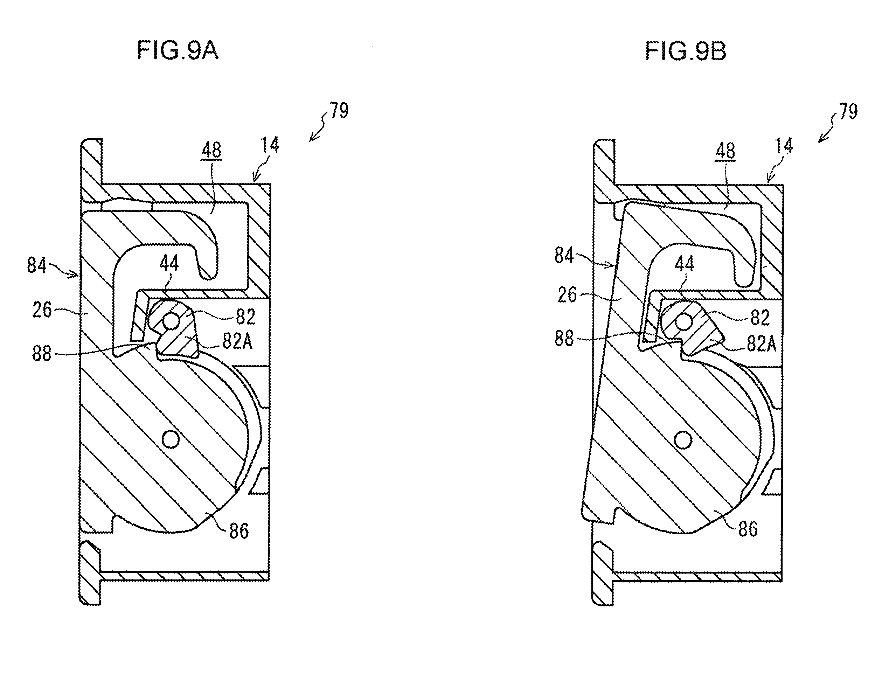

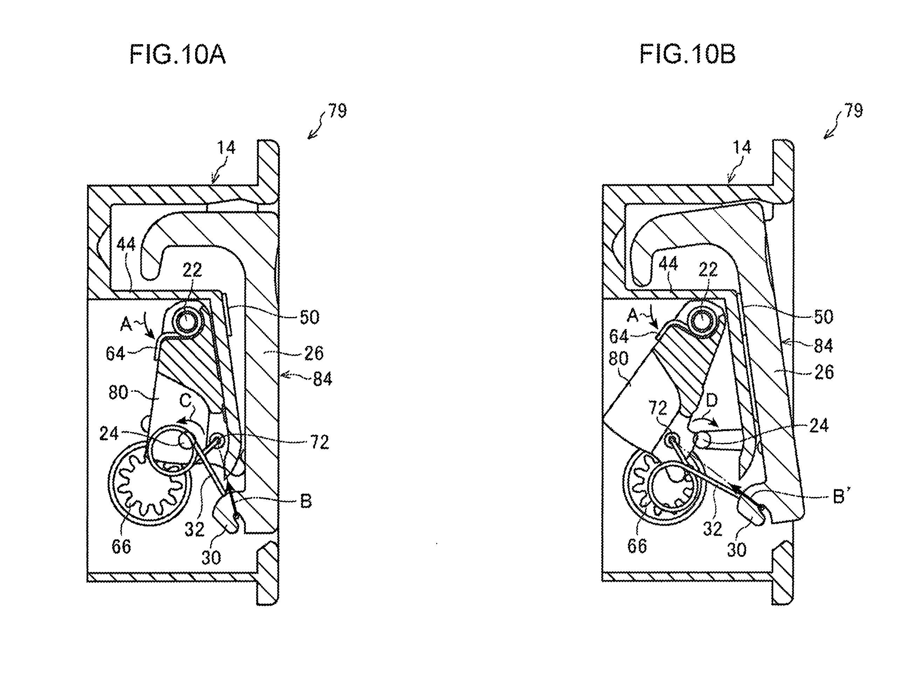

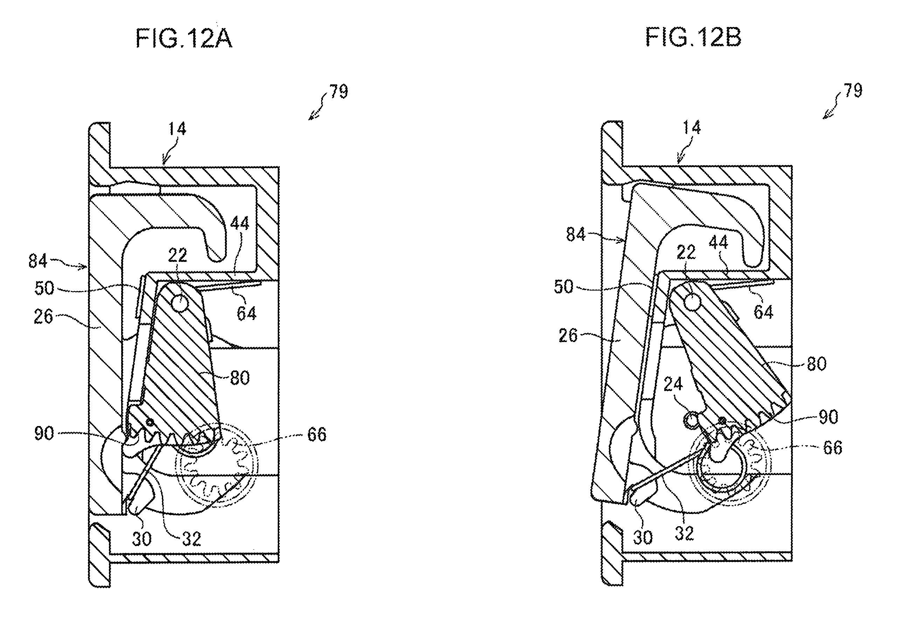

If, when hook member 84 is in a closed position as shown in Fig. 9A, hook member 84 is pushed in a pushing-in direction, axial portion 82 is pushed via projecting portion 88, as shown in Fig. 9B. As a result, as shown in Figs. 10A and 10B, rotating member 80 rotates around shaft 22. As shown in Fig. 12B, gear 90 is provided at a free end side of rotating member 80, and engages with damping gear 66.

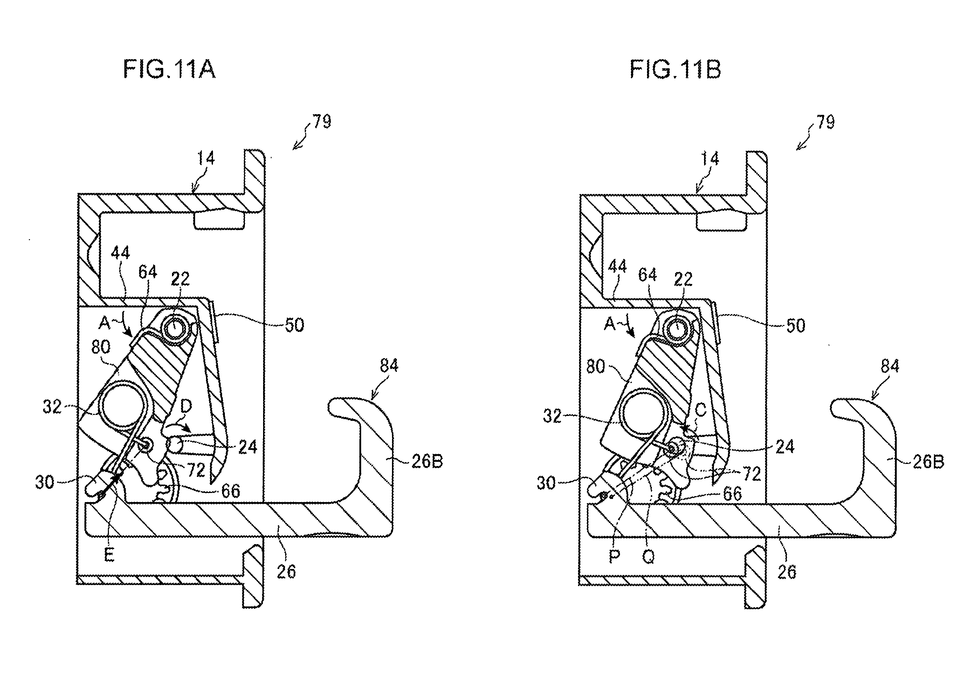

In the present embodiment the movement of hook member 84 is as shown in Figs. 10A through 11B, and since it is substantially the same as the movement of hook member 12 in the first embodiment, a detailed explanation thereof is omitted here. However, compared to the first embodiment, since it is possible to reduce the number of component parts, it is possible to reduce costs accordingly.

In the first embodiment and the second embodiment, hook member 12 rotates around shaft 24; however, the movement of hook member 12 is not limited thereto.

### Third Embodiment

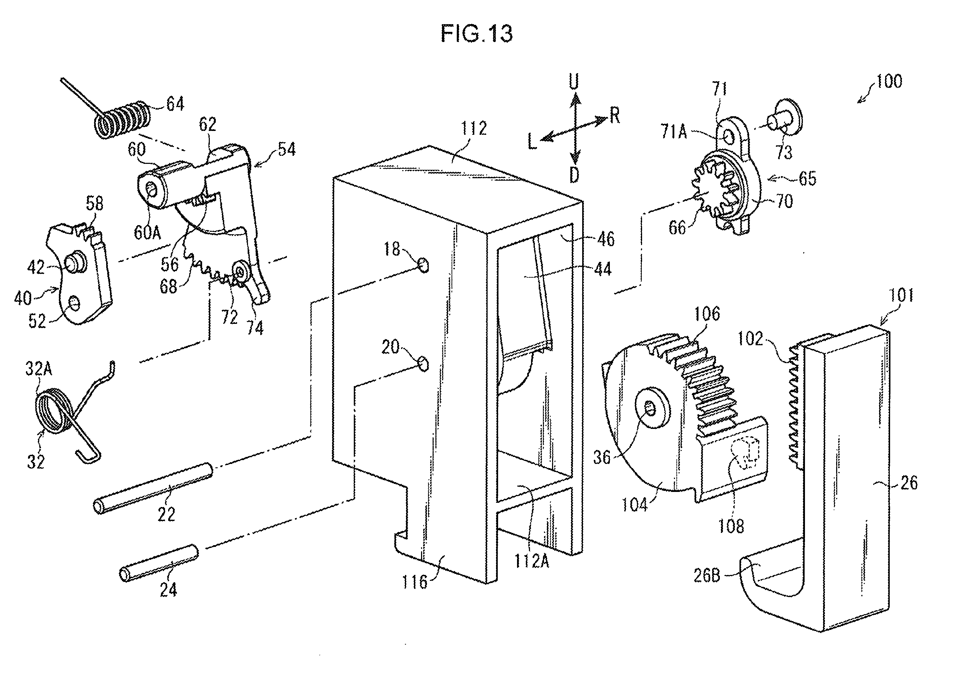

A third embodiment is shown in Fig. 13. Parts identical to those of the first embodiment are labeled with the same reference numerals, and detailed descriptions thereof are omitted.

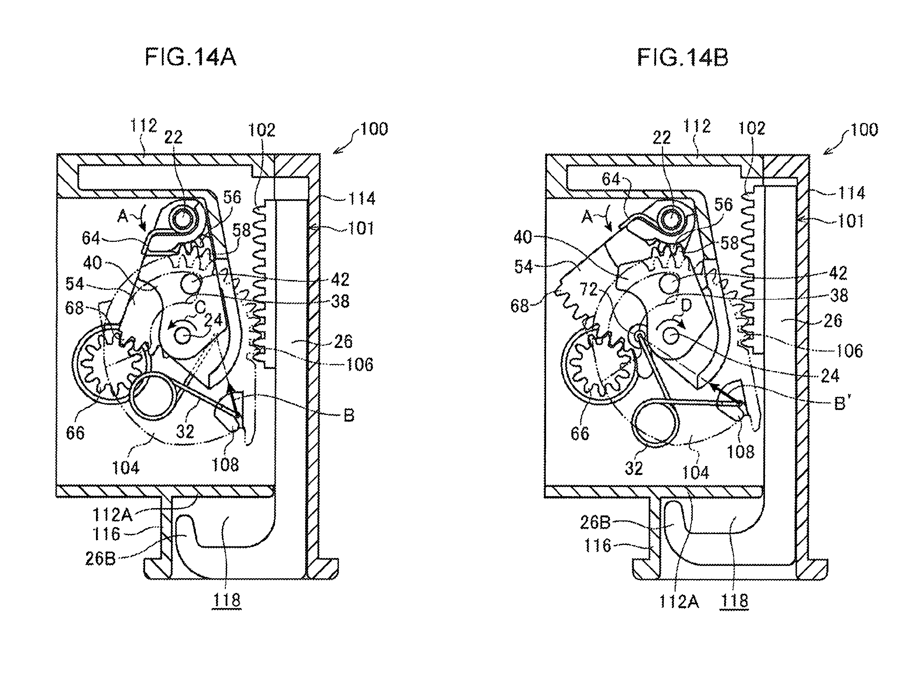

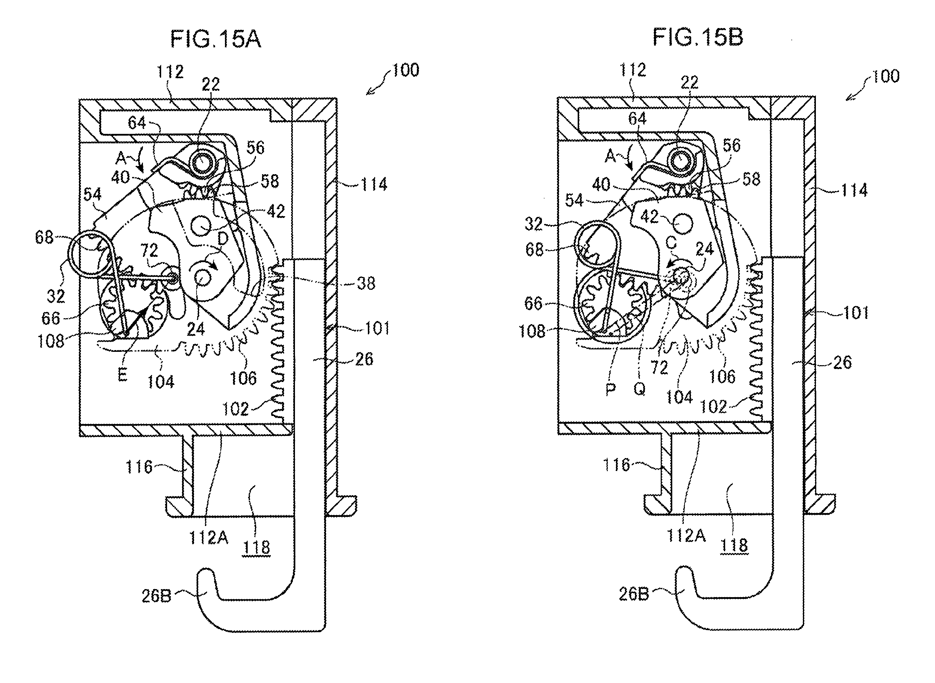

As shown in Figs. 14 and 15, in the present embodiment, a hook member 101 moves upward and downward (vertically) in a hook device 100. Hook member 101 includes hook portion 26 and a rack portion 102. Rack potion 102 is provided at an inner surface of hook member 101, and positioned at a side opposite to hook portion 26. Pinion portions 106 formed at an outer peripheral surface of a cylindrical rotating body 104 are configured to engage with rack portion 102.

Rotating body 104 is axially supported by shaft 24 and may rotate around shaft 24. As a result of the rotation of rotating body 104, rack portion 102 moves vertically via pinion portions 106, and hook member 101 moves vertically via rack portion 102. An attachment portion 108 is provided at rotating body 104, and one end of reversing spring 32 is attached to attachment portion 108.

Hook device 100 is provided with a box-shaped case 112, and a cover portion 114 is provided at opening portion 46 of case 112 such that hook member 101 1 is not exposed when hook member 101 is in a closed state. Although not shown in the drawings, cover portion 114 is provided with a guide portion running in a vertical direction, and hook member 101 is guided in a vertical direction by the guide portion.

A housing wall 116 extends downward from case 14, such that it may house hook portion 26 when hook member 101 is in a closed state (closed position/reference position of hook member 101). As shown in Fig. 14A, when hook member 101 is in a closed position, there is a space 118 between hook portion 26 and a lower side wall 112A of case 112, and as shown in Fig. 14B, hook member 101 may move further in an upward direction, and thereby it is possible to move hook member 101 towards a pushed-in position.

### <Fourth exemplary embodiment>

Next, a fourth exemplary embodiment will be described. The fourth exemplary embodiment is a modification example of the first and second exemplary embodiments. A lock mechanism (engaging mechanism) that stops the movement of a hook member (movable body) 200 while the hook member 200 is moved (advanced) to the open position (projecting position) is provided. Parts identical to those of the first and second exemplary embodiments are labeled with the same reference numerals, and detailed descriptions thereof are omitted.

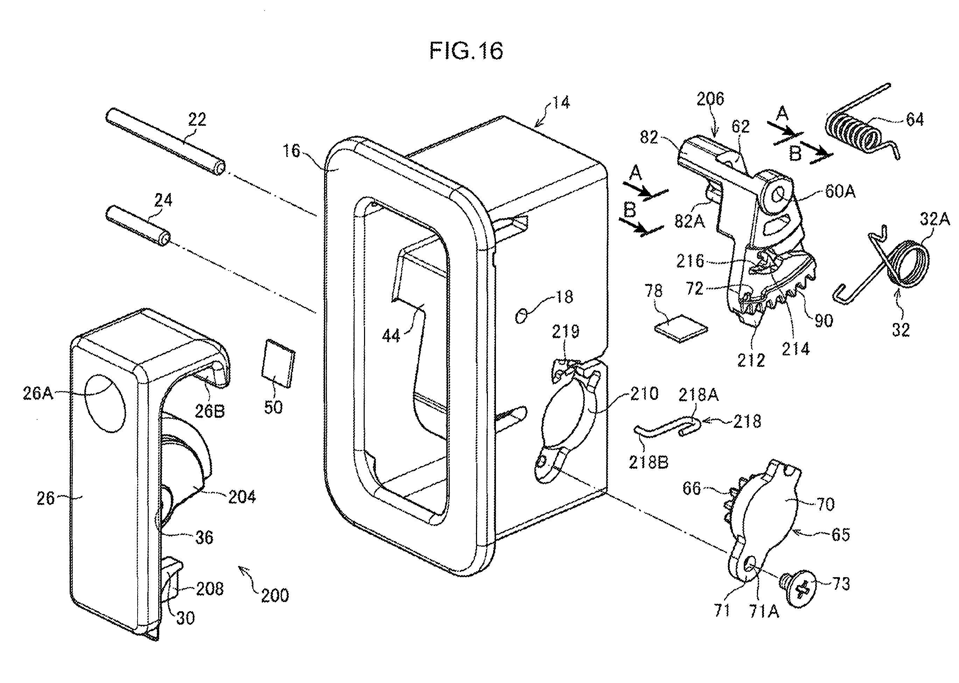

As shown in Fig. 16, the hook member 200 includes the hook portion 26, a leading end side of which bends in a hook shape, and a substantially semi-cylindrical portion 204 is provided on the inner surface of the rear end side of the hook portion 26, which is the center of rotation for opening and closing the hook member 200. Although the semi-cylindrical portion 204 is used here, the substantially cylindrical drum 86 may be used as in Fig. 7, and in particular, the shape thereof is not limited.

A stopper 208 that may be abutted onto a later-described rotating member 206 is projected in the lower portion of the semi-cylindrical portion 204 on the inner surface of the hook portion 26. The stopper 208 has an attachment portion 30 to which one end portion of the reversing spring 32 is attached.

Here, a rotating member 206 will be described.
The rotating member 206 has substantially the same shape as the rotating member 80 shown in Fig. 7. The rotating member 206 has at its free end the gear portion 90. The gear portion 90 may engage with the damping gear 66 attached to a housing portion 210 provided in a side wall in the longitudinal direction of the case 14.

The attachment portion 72 is provided near the tooth base of the gear portion 90 on the opening portion 46 side of the case 14, and the other end portion of the reversing spring 32 is attached thereto. In addition, an extending piece 212 extends from the free end of the rotating member 206 on the opposite side of the attachment portion 30 having the gear portion 90 interposed therebetween, and may be abutted onto the stopper 208.

In addition, a cam groove 216 (engaging mechanism) having a convex heart portion 214 formed in a substantially heart shape is provided in the center portion of the rotating member 206, and may engage with a substantially U-shaped pin member218 (engaging mechanism) attached to the case 14.

The pin member 218 is fitted into an attachment portion 219 provided at the case 14, and has a center portion that is a supporting portion 218A so as to be swingable around the supporting portion 218A. In addition, the pin member 218 has a trace portion 218B at one end portion, the trace portion 218B extends in parallel with the supporting portion 218A toward the opposite side of the supporting portion 218A, the trace portion 218B engaging with the cam groove 216.

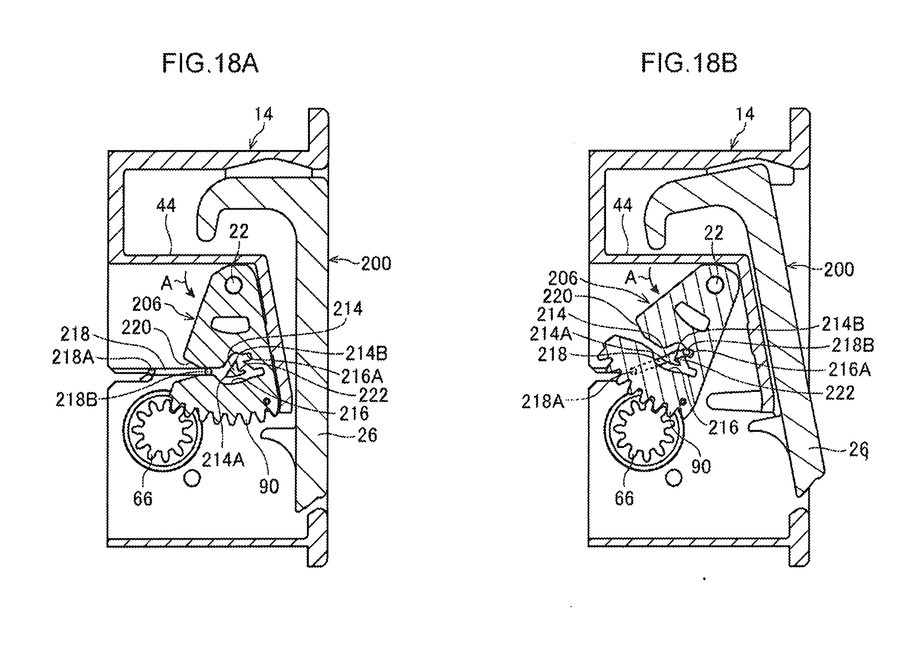

As shown in Fig. 18A, the cam groove 216 is communicated with an introducing portion 220 formed on the opposite side of the hook member 200 in the rotating member 206, and the trace portion 218B is guided to the cam groove 216 through the introducing portion 220. A top portion 214A of the heart portion 214 facing the introducing portion 220 side is located at the gear portion 90 side from the introducing portion 220, and the trace portion 218B guided from the introducing portion 220 is moved along an upper slope of the heart portion 214. That is, the pin member 218 is swung around the supporting portion 218A according to a topology of the cam groove 216 and the movement of the rotating member 206.

In addition, an entrance path 216A into which the trace portion 218B may enter is provided at the back of a top portion 214B formed at the upper slope of the heart portion 214 (on the hook member 200 side of the rotating member 206). When the rotating member 206 is rotated so that the trace portion 218B passes through the top portion 214B of the heart portion 214 of the cam groove 216, the trace portion 218B enters into the entrance path 216A.

A lock portion 222 (engaging mechanism) of the heart portion 214 is formed on substantially the opposite side of the introducing portion 220 in the cam groove 216. When the trace portion 218B reaches the lock portion 222, the trace portion 218B is engaged and is brought into locked state. Then, when the trace portion 218B is released from the locked state, the trace portion 218B may be moved along the cam groove 216.

Here, in the closed position (reference position) of the hook member 200, as shown in Fig. 18A, an external force hardly acts upon the pin member 218, and the pin member 218 is provided in substantially horizontal state. However, as shown in Fig. 18B, when the hook member 200 is rotated to the pushed-in position (the predetermined position), the rotating member 206 is rotated with the rotation of the hook member 200. As described above, the trace portion 218B is guided upward along the upper slope of the heart portion 214, so that the pin member 218 is swung around the supporting portion 218A due to the trace portion 218B movement. At this time, the elastic energy (biasing force) is stored in the pin member 218. Thereby, the restoring force, that is, the downward biasing force acts upon the trace portion 218B.

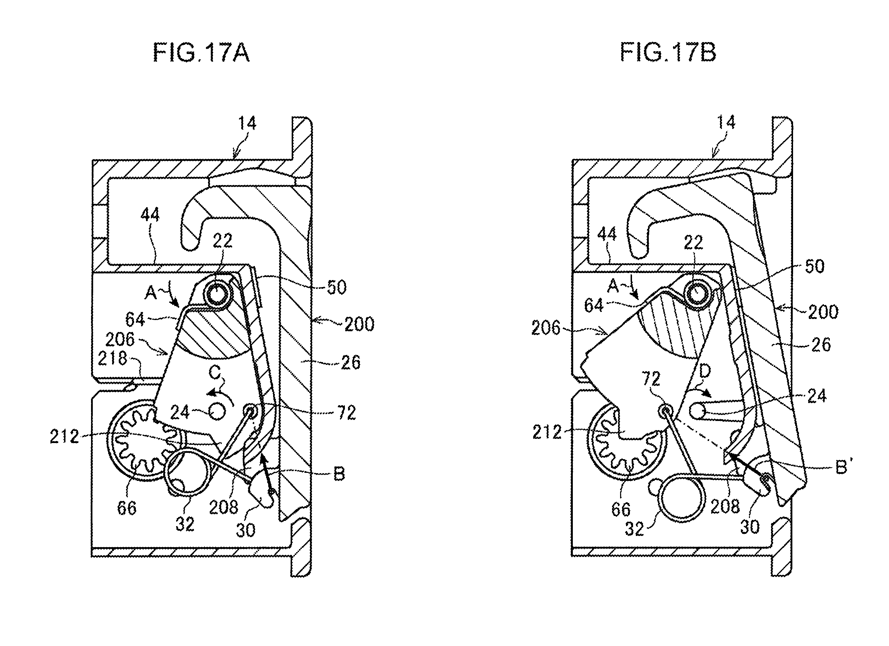

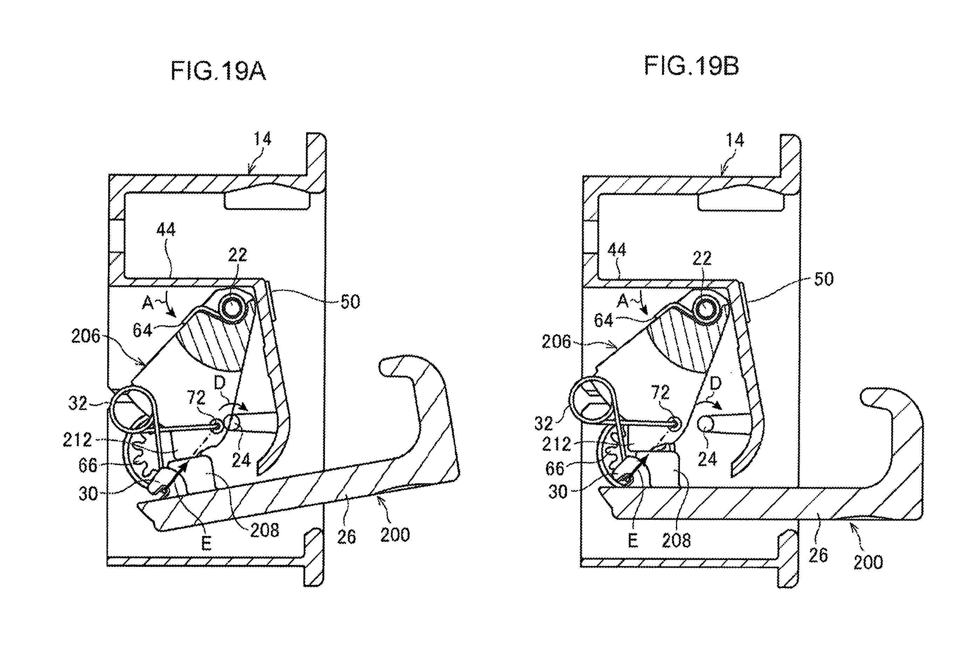

When pressing to the hook member 200 is stopped after the hook member 200 is rotated to the pushed-in position, as shown in Figs. 17B and 19A, the hook member 200 is rotated in the open position direction by the biasing force of the reversing spring 32. Since the biasing force in the direction of the arrow A acts upon the rotating member 206 by the torsion coil spring 64, the rotating member 206 is also gradually rotated in the direction of the arrow A.

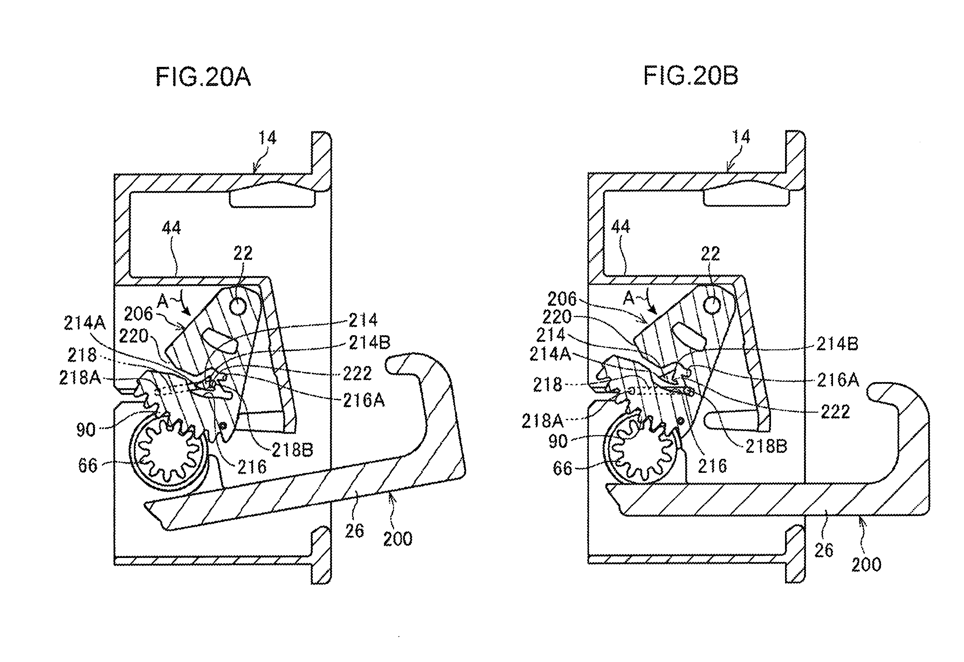

Thereby, the trace portion 218B is pulled out of the entrance path 216A. Here, since the downward biasing force acts upon the trace portion 218B, when the trace portion 218B is pulled out of the entrance path 216A, as shown in Fig. 20A, the trace portion 218B engages with the lock portion 222 of the cam groove 216 to regulate the movement of the rotating member 206 in the direction of the arrow A.

While the hook member 200 is moved to the open position, as shown in Fig. 19A, the stopper 208 provided to the hook member 200 contacts with the extending piece 212 of the rotating member 206 to stop the rotation of the hook member 200.

From this state, when the hook member 200 is further rotated in the open direction, as shown in Fig. 19B, the rotating member 206 is rotated via the stopper 208 and the extending piece 212. Thereby, as shown in Fig. 20B, the engaged state of the trace portion 218B and the lock portion 222 of the cam groove 216 is released.

### Explanation of the hook member operation

As shown in Fig. 17A, in the closed position (reference position) of the hook member 200, both end portions of the reversing spring 32 are biased towards the direction of mutually approaching (the elastic energy is stored). In addition, the gear portion 90 of the rotating member 206 engages with the damping gear 66, and receives viscous resistance by the damping gear 66.

The moment in the direction of the arrow C (in the direction closing the hook member 12) acts around the shaft 24 upon the hook member 12 by the biasing force of the reversing spring 32. On the other hand, one end portion of the torsion coil spring 64 is attached to the rotating member 206 to bias the rotating member 206 in the direction of the arrow A (in the direction opening the hook member 12).

For this reason, in the closed position of the hook member 12, a stress in the closing direction of the hook member 12 and a stress in the opening direction of the hook member 12 are set to counterbalance, so that the state of the closed position of the hook member 12 may be maintained.

Next, as shown in Figs. 17B and 18B, the hook member 12 is pressed from the closed position shown in Figs. 17A and 18A to the pushed-in position (the predetermined position), the abutting portion 82A is pressed via the projecting portion 88 (see Fig. 9A), so that the rotating member 206 is rotated around the shaft 24. For this reason, the torsion coil spring 64 is biased in the direction (in the opposite direction of the direction of the arrow A) against the biasing force (in the direction opening the hook member 12), and is brought into the state that the elastic energy (biasing force) is stored.

In addition, as shown in Figs. 18A and 18B, the trace portion 218B is guided upward along the cam groove 216 by the rotation of the rotating member 206, and enters into the entrance path 216A. At this time, the pin member 218 is swung around the supporting portion 218A due to the trace portion 218B movement, so that the elastic energy (biasing force) is stored in the pin member 218.

As shown in Figs. 17A and 17B, the attachment portion 72 is moved to the inner side of the shaft 24 by the rotation of the rotating member 206. Thereby, the elastic energy (biasing force) is stored in the reversing spring 32, and the biasing force acts in the direction of the arrow B'. The moment in the direction of the arrow D (in the direction opening the hook member 12) acts around the shaft 24 upon the hook member 200.

Here, the gear portion 90 of the rotating member 206 engages with the damping gear 66. Since the movement of the rotating member 206 is regulated up to a predetermined stress value, the biasing force of the reversing spring 32 acts upon the hook member 200 earlier than the biasing force of the torsion coil spring 64.

That is, one end portion of the reversing spring 32 (the attachment portion 30 of the hook member 200) is drawn to the other end portion of the reversing spring 32 (the attachment portion 72 of the rotating member 206) side by the biasing force of the reversing spring 32. As shown in Figs. 17B and 19A, the hook member 200 is rotated in the opening direction by movement of the attachment portion 30.

At this time, the rotating member 206 is also gradually rotated in the direction of the arrow A, and the trace portion 218B of the pin member 218 is pulled out of the entrance path 216A and, as shown in Fig. 20A, engages with the lock portion 222 of the cam groove 216 to regulate the movement of the rotating member 206 in the direction of the arrow A.

When the hook member 200 is rotated to the open position, as shown in Fig. 19A, the stopper 208 provided to the hook member 200 contacts with the extending piece 212 of the rotating member 206. Since the movement of the rotating member 206 in the direction of the arrow A is regulated, the movement of the hook member 200 is also regulated via the extending piece 212 and the stopper 208 to stop the rotation of the hook member 200. In this state, clothing or the like may be caught on the hook portion 26.

From this state, as shown in Fig. 19B, when the hook member 200 is further rotated in the open direction, that is, clothing is caught on the hook member 200 or the hook member 200 is pressed down by a finger, the rotating member 206 is rotated in the opposite direction of the direction of the arrow A via the stopper 208 and the extending piece 212 of the hook member 200.

Thereby, as shown in Figs. 20A and 20B, the engaged state of the trace portion 218B and the lock portion 222 of the cam groove 216 is released. In this state, as shown in Fig. 19B, the biasing force of the reversing spring 32 acts in the direction of the arrow E, so that the moment in the direction of the arrow D (in the direction opening the hook member 200) acts around the shaft 24 upon the hook member 200.

Here, as described above, in this state, the elastic energy in the direction opening the hook member 200 is stored in the torsion coil spring 64. For this reason, the rotation member 206 is gradually rotated around the shaft 22 by the biasing force of the torsion coil spring 64.

The direction in which the biasing force caused by the reversing spring 32 acts is gradually shifted along with the rotation of the rotation member 206. When the rotation member 206 is rotated around the shaft 22, the damping gear 66 is rotated via the gear portion 90. For this reason, the damping effect of the damping gear 66 acts upon the rotation member 206.

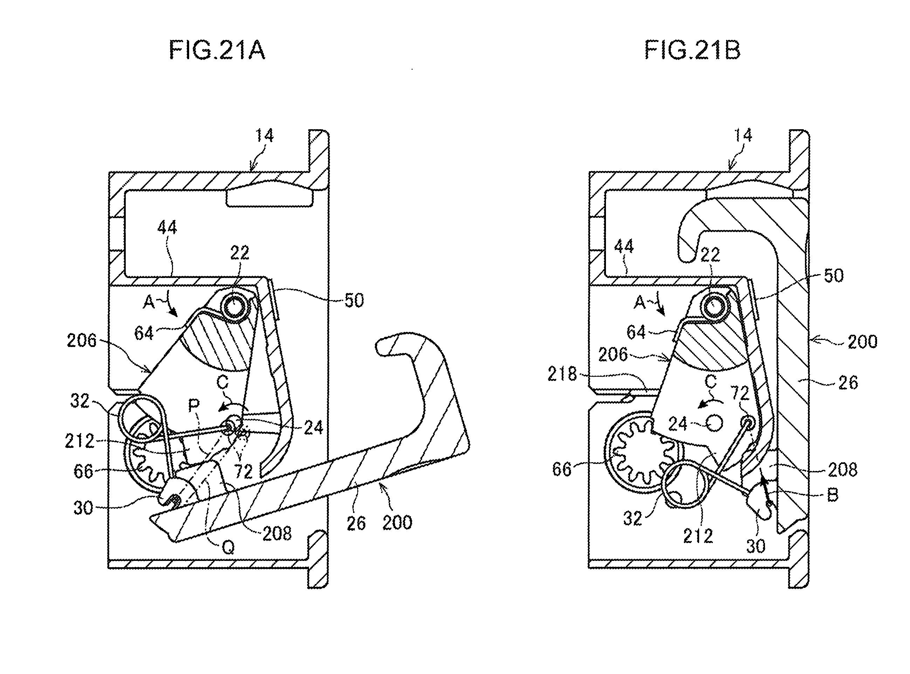

As shown in Fig. 21A, when a line indicating action P of the biasing force of the reversing spring 32, that connects one end portion (the attachment portion 30 to the hook member 12) and the other end portion (the attachment portion 72 at the rotation member 206) thereof reaches the position (inflection point) where the line of action P is superposed with the shaft 24 of the hook member 200, the moment around the shaft 24 does not act upon the hook member 200.

When the rotation member 206 is further rotated from this state in the direction of the arrow A, the line of action P of the biasing force of the reversing spring 32 is moved to a line indicating action Q, and the moment in the direction of the arrow C (in the direction closing the hook member 12) acts upon the hook member 200 around the shaft 24.

Thereby, the hook member 200 is rotated in the closing direction. At this time, since the rotating member 206 is also rotated around the shaft 24, the damping gear 66 is rotated via the gear portion 90, so that the damping effect of the damping gear 66 acts upon the rotating member 206. Then, the damping effect of the damping gear 66 also acts upon the hook member 200 via the reversing spring 32, so that the hook member 200 is rotated quietly.

### The operation of the hook member

In the first to third exemplary embodiments, when the hook member is moved from the closed position to the pushed-in position (the hook member is moved from the reference position to the predetermined position), the force moving (advancing) the hook member to the open position (projecting position) acts by the biasing force of the reversing spring 32. On the other hand, when the hook member 200 passes through the inflection point where the direction in which the biasing force of the reversing spring 32 acts is changed according to the position of the hook member, the force moving (returning) the hook member to the closed position (reference position) acts.

That is, the operation of the hook member is only stopped at the inflection point where the direction in which the biasing force of the reversing spring 32 acts is changed. In contrast with such an operation of the hook member, in this exemplary embodiment, the cam groove 216 provided with the lock portion 222 is formed in the rotating member 206, the pin member 218 that engages with the cam groove 216 is attached to the case 14, and as shown in Fig. 20A, the trace portion 218B of the pin member 218 engages with the lock portion 222 while the rotating member 206 is rotating whereby the rotation of the rotating member 206 can be stopped. Accordingly, the rotation of the hook member 200 is stopped via the rotating member 206.

In this way, since the rotation of the hook member 200 is stopped while the hook member 200 is moving to the open position, the open state of the hook member 200 (the state that the hook member 200 is in the open position) may be maintained long. This enables that, for instance, a coat may be easily caught on the hook member 200 as the hook member 200 is stopped.

Then, in the state that the hook member 200 is stopped, when the hook member 200 is further moved in the advancing direction, the trace portion 218B is disengaged from the lock portion 222. Thereby, the hook member 200 is returned to the closed position (reference position) by the biasing force of the reversing spring 32.

For instance, with the use of the hook member 200 as a hook for clothes, when a coat or the like is hung on the stopped hook member 200, the hook member 200 is caused to further move to the open position such that the engaged state of the trace portion 218B and the lock portion 222 is released. For this reason, when the coat is removed from the hook member 200, the hook member 200 is automatically returned to the closed position (reference position).

As shown in Fig. 20B, the hook member 200 is further rotated in the opening direction, as shown in Figs. 19A and 19B, the rotating member 206 is rotated in the opposite direction of the direction of the arrow A via the stopper 208 and the extending piece 212 of the hook member 200.

However, the biasing force in the direction of the arrow A acts upon the rotating member 206 by the torsion coil spring 64. Since the damping gear 66 engages with the gear portion 90, the rotating member 206 is gradually counter-rotated in the direction of the arrow A. Accordingly, the direction in which the biasing force caused by the reversing spring 32 acts is gradually shifted by the rotation of the rotation member 206. Until the hook member 200 passes through the inflection point of the reversing spring 32, the hook member 200 is not rotated in the closing direction.

As explained above, in the open position of the hook member 200 between the state that the rotation of the hook member 200 is stopped and the state that the hook member 200 is further rotated in the opening direction, the rotating member 206 is rotated in the opposite direction of the direction of the arrow A as shown in Figs. 19A and 19B, a period until the hook member 200 is counter-rotated in the closing direction may be maintained longer. The hook member 200 is slowly returned after an item caught on the hook member 200 is removed, so that the caught item may be easily taken out.

In this exemplary embodiment, the cam groove 216 is formed in the rotating member 206, and the pin member 218 is attached to the case 14. The present invention is not limited to such an arrangement. For instance, although not shown, the cam groove may be formed in the case so that the pin member is attached to the rotating member. In addition, the cam groove may be formed in the drum portion of the hook member and the pin member is provided at the support, or the pin member may be provided at the drum portion and the cam groove is formed in the support.

In addition, in this exemplary embodiment, the trace portion 218B engages with the lock portion 222 while the hook member 200 is moved to the open position. The timing in which the trace portion 218B engages with the lock portion 222 is not limited to this.

A shape of the cam groove 216 is changed so that the timing in which the trace portion 218B engages with the lock portion 222 may be changed. For instance, after the hook member 200 is once moved to the open position, the trace portion 218B may engage with the lock portion 222 while the hook member 200 is returned to the closed position, or the trace portion 218B may engage with the lock portion 222 plural times.

### <Fifth exemplary embodiment>

Next, a fifth exemplary embodiment will be described. The fifth exemplary embodiment is a modification example of the fourth exemplary embodiment, and is similar to the third exemplary embodiment. Parts identical to those of the third and fourth exemplary embodiments are labeled with the same reference numerals, and detailed descriptions thereof are omitted.

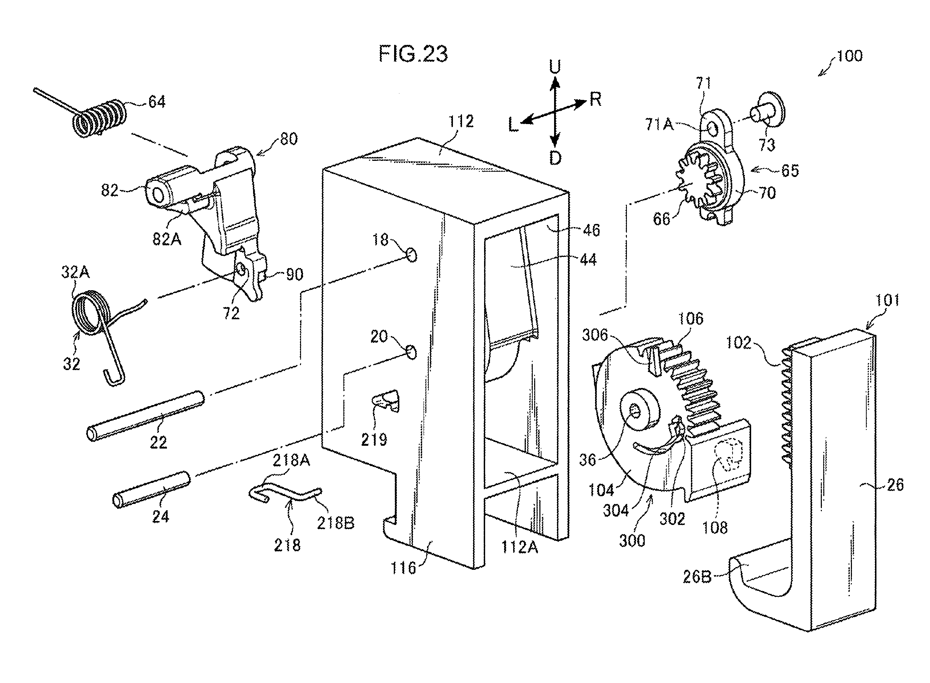

As shown in Fig. 23, in this exemplary embodiment, the hook member 101 is moved (slid) up and down, and the pinion portion 106 formed to a rotating body 300 engages with the rack portion 102 of the hook member 101. A cam groove (engaging mechanism) 304 having a heart portion 302 is arcuately formed to the rotating body 300.

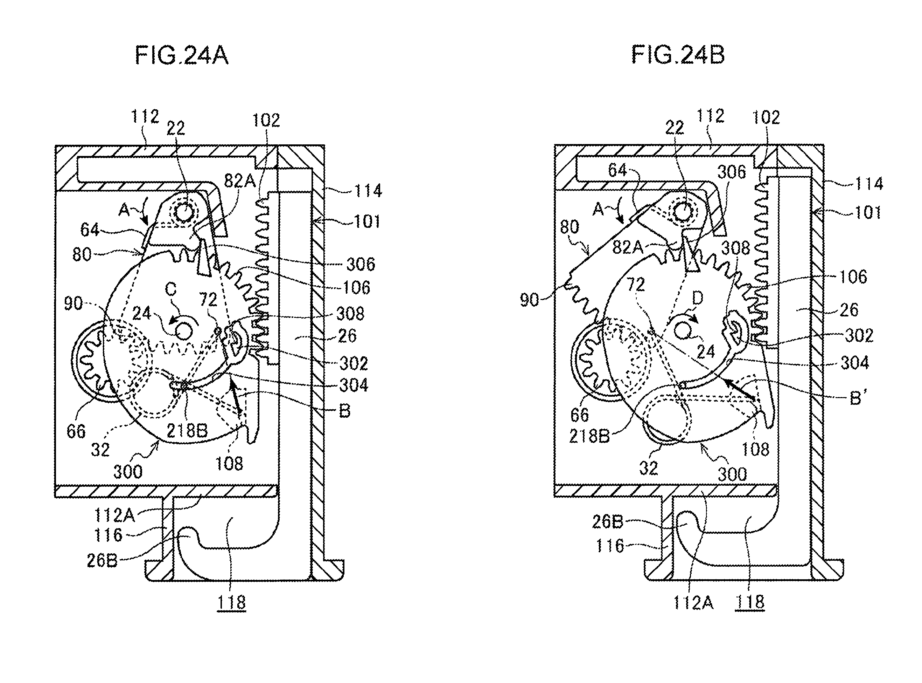

In addition, the pressing pin 306 is provided on the outer circumferential side of the rotating body 300, and may contacts with the abutting portion 82A of the axial portion 82 of the rotating member 80. As shown in Figs. 24A and 24B, the hook member 101 is slid from the closed position (reference position) to the pushed-in position (predetermined position), the pressing pin 306 presses the abutting portion 82A by the rotation of the rotating body 300.

The pin member 218 is swingably attached to the case 14 around the supporting portion 218A, and may engage with the cam groove 304. The pin member 218 is swung around the supporting portion 218A according to a topology of the cam groove 304 and the movement of the rotating body 300.

In addition, a lock portion 308 is formed in the heart portion 302, and when the trace portion 218B reaches the lock portion (engaging mechanism) 308, the trace portion 218B is engaged and is brought into a so-called locked state, so that the rotating body 300 stops moving. Thereby, the hook member 101 stops moving.

In addition, when the trace portion 218B is released from the locked state, the trace portion 218B may be moved along the cam groove 304 so that the hook member 101 may be movable by the rotation of the rotating body 300.

As shown in Figs. 24A and 24B, when the hook member 101 is slid from the closed position to the pushed-in position, the rotating body 300 is rotated and the pressing pin 306 presses the axial portion 82A to rotate the rotating member 80.

As shown in Fig. 24B, after the hook member 101 is slid to the pushed-in position, the pressing force to the hook member 101 is released, then the hook member 101 is moved to the open position (projecting position) by the rotation of the rotating body 300 caused by the biasing force of the reversing spring 32.

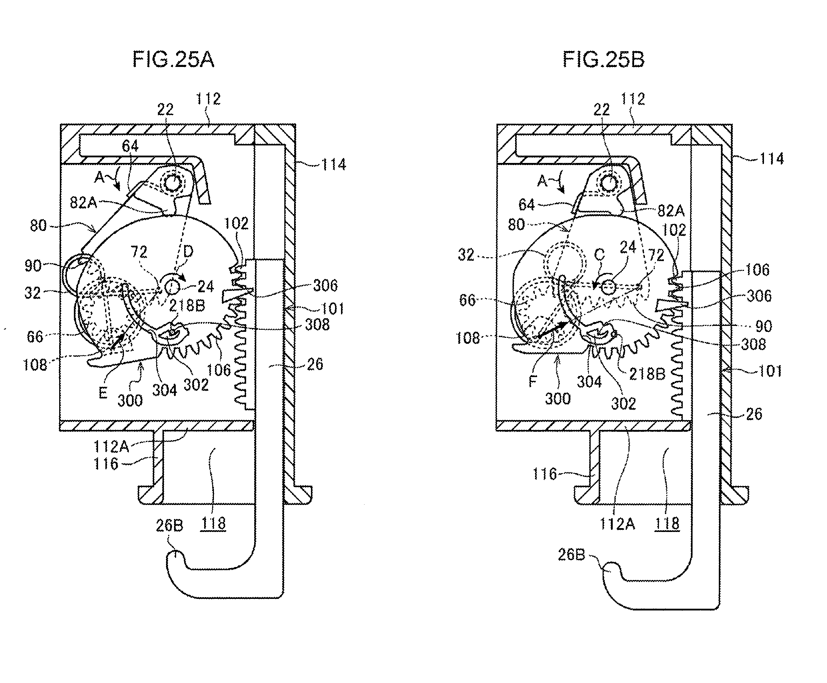

The trace portion 218B is swung along the cam groove 304 by the rotation of the rotating body 300. As shown in Fig. 25A, the trace portion 218B engages with the lock portion 308 of the cam groove 304. Thereby, the rotating body 300 stops rotating to stop the movement of the hook member 101. Here, since the biasing force in the direction of the arrow A acts upon the rotating body 300 by the torsion coil spring 64, the rotating member 80 is also gradually rotated in the direction of the arrow A.

When the hook member 101 is slid further in the opening direction from this state, as shown in Fig. 25B, the rotating body 300 is rotated via the hook member 101, so that the engaged state of the trace portion 218B and the lock portion 308 of the cam groove 304 is released.

In the state that the rotating member 80 is returned to the original position (see Fig. 25B) by the biasing force of the torsion coil spring 64, the biasing force of the reversing spring 32 acts in the direction of the arrow F, so that the moment in the direction of the arrow C (in the direction closing the hook member 101) acts around the shaft 24 upon the rotating body 300. For this reason, the hook member 101 is slid upward so as to be returned to the closed position.

In this exemplary embodiment, the cam groove 304 is formed in the rotating body 300, and the pin member 218 is attached to the case 112. The present invention is not limited to this. For instance, although not shown, the cam groove may be formed in the case, and the pin member may be attached to the rotating body. In addition, the cam groove may be formed at the hook member and the pin member may be provided at the support, or the pin member may be provided at the hook member and the cam groove may be formed in the support.

In addition, in this exemplary embodiment, the trace portion 218B engages with the lock portion 308 while the hook member 101 is moved to the open position. However, the timing in which the trace portion 218B engages with the lock portion 308 is not limited to this.

The shape of the cam groove 304 is changed so that the timing in which the trace portion 218B engages with the lock portion 308 may be changed. For instance, after the hook member 101 is moved once to the open position, the trace portion 218B may engage with the lock portion 308 while the hook member 101 is returned to the closed position, or the trace portion 218B may engage with the lock portion 308 plural times.

### <Sixth exemplary embodiment>

Next, a sixth exemplary embodiment will be described. The sixth exemplary embodiment is a modification example of the first and second exemplary embodiments. Parts identical to those of the first and second exemplary embodiments are labeled with the same reference numerals.

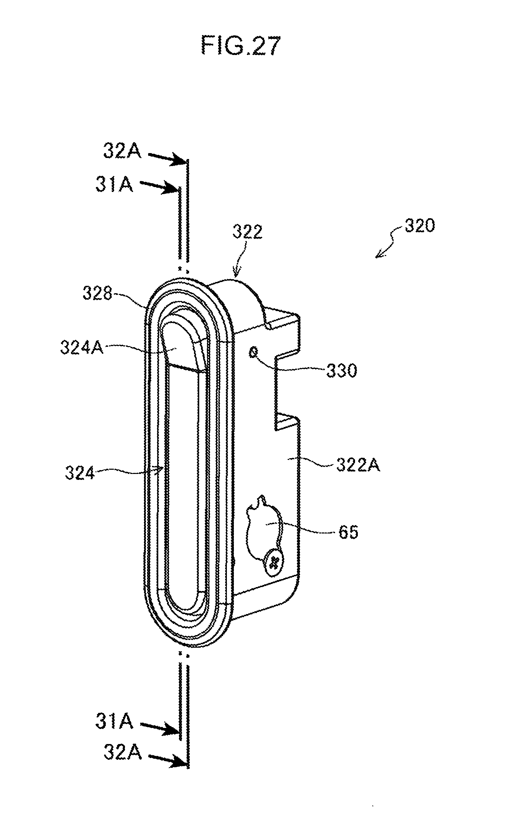

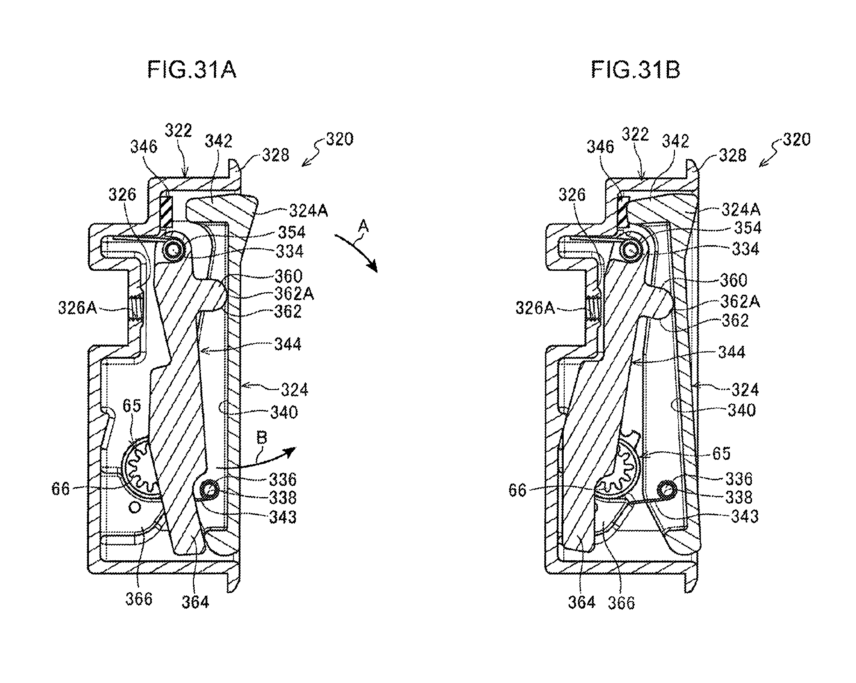

As shown in Figs. 27 to 31A (Fig. 31A is a sectional view taken along line 31A-31A of Fig. 27), a hook device (an operational mechanism for a movable body) 320 has a box-shaped case (support) 322, and a hook member (movable body) 324 may be housed in the case 322. A square projecting portion 326 projects at a slightly upper portion from the center of the bottom wall of the case 322, and a female screw portion 326A is formed at the center portion of the projecting portion 326.

The projecting portion 326 may engage with a square engagement projection provided to an attached portion (not shown) to which the hook device 320 is attached. In the state that the projecting portion 326 engages with the engagement projection, a fixing screw (not shown) is screwed into a female screw portion formed in the engagement projection as well as the female screw portion 326A, so that the hook device 320 is attached to the attached portion.

In addition, corner portions of a side wall 322A of the case 322 is round-cornered, and a flange portion 328 extends from the end face of the side wall 322A to the outside along the entire circumference of the case 322 according to the shape of the side wall 322A. In addition, axial support holes 330 and 332 are formed on the side wall of the case 322 at the upper and lower sides in the longitudinal direction (vertical direction) of the case 322, and shafts 334 and 336 are fixed into the axial support holes 330 and 332.

An axial hole 338 through which the shaft 336 may be inserted is formed at one end side of the hook member 324. In the state that the shaft 336 is inserted, the hook member 324 may be rotated with respect to the shaft 336.

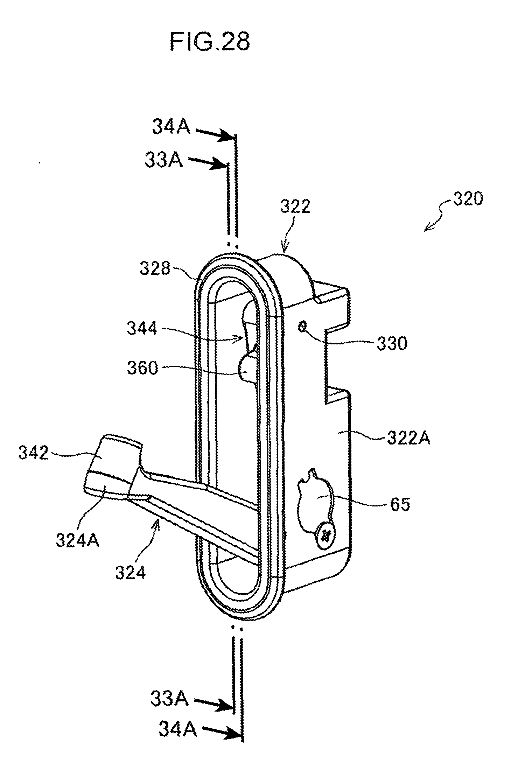

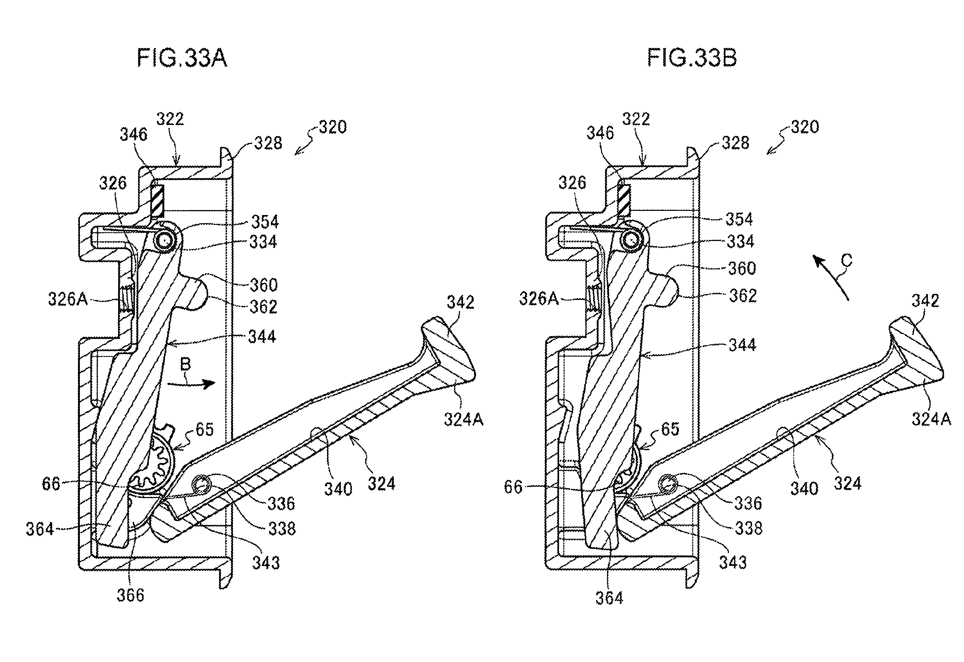

As shown in Fig. 33A (Fig. 33A is a sectional view taken along line 33A-33A of Fig. 28), a groove portion 340 is recessed at the side that becomes the upper surface of the hook member 324 in the state that the hook member 324 is arranged in the open position (projecting position); so-called lightening is performed. Thereby, sink marks on the surface caused after the hook member 324 is molded may be prevented. In addition, by providing the groove portion 340 in the hook member 324, the weight of the hook member 324 may be reduced, and a cost for a resin molding the hook member 324 may be reduced.

In addition, as shown in Fig. 31A, in the state that the hook member 324 is housed in the case 322, a projecting portion 324A projecting from the case 322 in side view is provided at the outer surface on the free end side (the other end side) of the hook member 324. The projecting portion 324A may become a marker for pressing the hook member 324 and is easily touched by a finger.

Additionally, a hook portion 342 bent in a hook shape is provided at the free end of the hook member 324, so that clothing or the like may be caught on the hook portion 342. One end portion of a torsion coil spring 343 is attached to a rotation center side (one end side) of the hook member 324. The other end portion of the torsion coil spring 343 is attached to an attachment portion 366 provided in the lower portion of the bottom wall of the case 322, and is in a substantially neutral state in the closed position (reference position) of the hook member 324.

Here, the center of gravity of the hook member 324 is provided outside at a case 322 side from the position where the shaft 336 is inserted, so that the hook member 324 may be rotatable in the opening direction (the direction of the arrow A) around the shaft 336 in the closed position of the hook member 324. For this reason, in the closed position of the hook member 324, a later-described gear member (rotating member) 344 is contacts with the hook member 324 so as to regulate the movement of the hook member 324 in the opening direction.

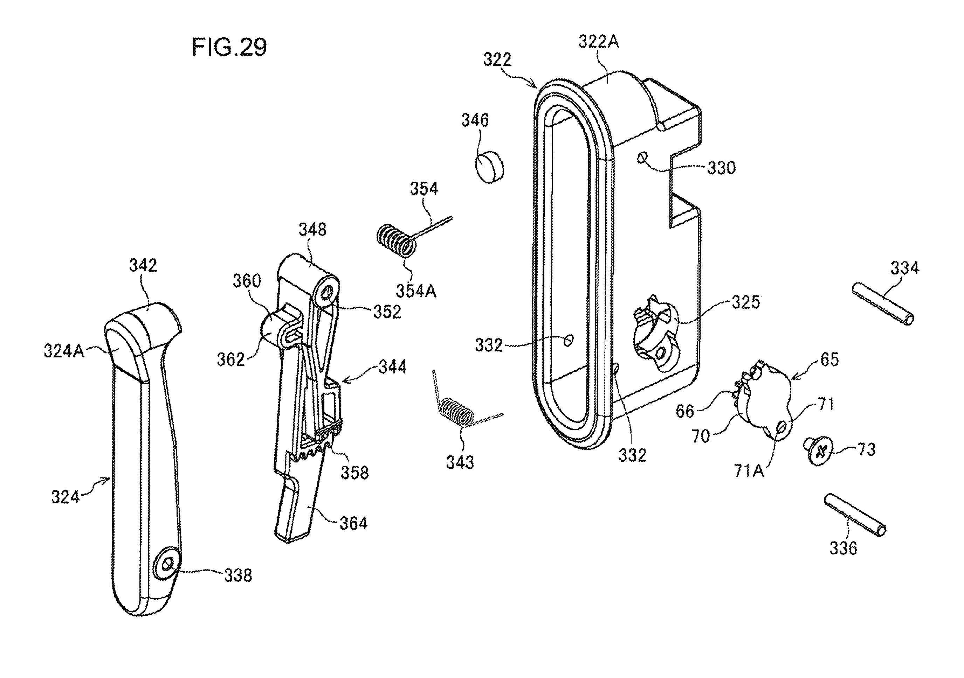

As shown in Figs. 29 and 31A, the hook portion 342 of the hook member 324 may be housed in the upper portion of the case 322, and a cylindrical cushion rubber 346 formed of a rubber member is fixed onto the upper portion of the bottom wall of the case 322.

As shown in Fig. 31B, the hook portion 342 may be contact with the cushion rubber 346 thereby preventing a hit of the hook portion 342 onto the back wall of the case 322, and the hook member 324 is biased in the opening direction by a restoring force of elastic deformation of the cushion rubber 346.

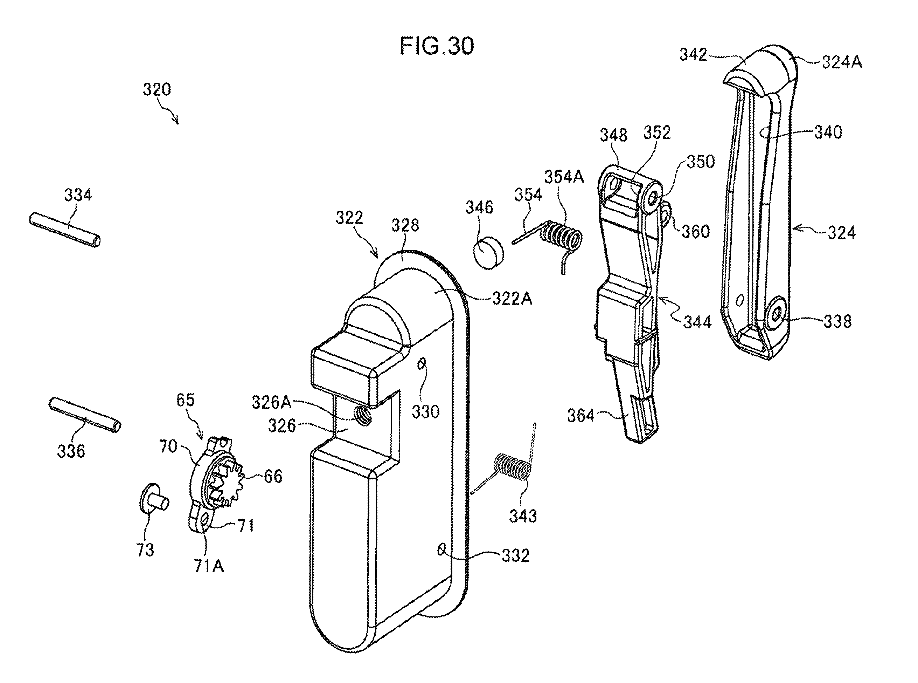

The gear member 344 is rotatably supported around the shaft 334. As shown in Fig. 30, a cylindrical shaft portion 348 is provided to the gear member 344, and a shaft 334 is inserted through an axial hole 350 formed in the center portion of the shaft portion 348.

In addition, a housing portion 352 is cut away in the center portion in the longitudinal direction of the shaft portion 348, so that a torsion coil spring (biasing member) 354 may be housed in the housing portion 352, and the shaft 334 is inserted into a coil portion 354A of the torsion coil spring 354. The torsion coil spring 354 has one end portion attached to the gear member 344, the other end portion fixed to the case 322 side and, as shown in Fig. 31A, biases the gear member 344 in the direction of the arrow B.

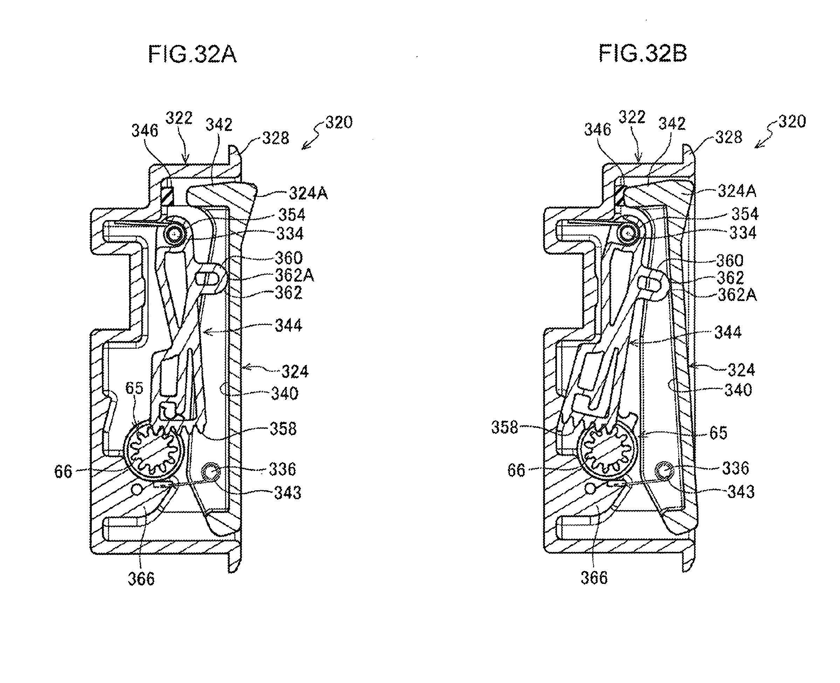

In addition, as shown in Figs. 29 and 32A (Fig. 32A is a sectional view taken along line 32A-32A of Fig. 27), a gear portion 358 engaging with the damping gear 66 is formed at the free end side of the gear member 344. The damping gear 66 configures part of the damping unit 65, and is attached in the cylindrical housing 70. The housing 70 is filled with a viscous fluid such as silicon oil, and the viscous resistance of the viscous fluid acts upon the forward rotation and the reverse rotation of the damping gear 66. For this reason, a damping effect by the viscous resistance acts upon the gear portion 358 via the gear portion 68 of the damping gear 66, so that the gear member 344 is rotated quietly.

A fixing portion 325 that extends through the side wall 322A and fixes the damping unit 65 to the side wall 322A is formed in the lower portion of the side wall 322A of the case 322. A fixing piece 71 extends from the outer circumferential surface of the housing 70 of the damping unit 65, and the fixing pin 73 is inserted through the fixing hole 71A formed in the fixing piece 71 and is fixed to the fixing portion 325.

In this way, the damping unit 65 is fixed at one point in the circumferential direction of the housing 70, so that the damping unit 65 may be rotated with reference to the fixing pin 73. Accordingly, a clearance may be provided between the gear portion 358 and the damping gear 66 by the constrictive force of the fixing pin 73.

In addition, as shown in Fig. 31A, an abutting portion (a first abutting portion or a regulating portion) 360 is provided at the rotation center side of the gear member 344 to project toward the hook member 324 side, and contacts with the bottom surface of the groove portion 340 of the hook member 324. An arc surface 362 is formed at the leading end portion of the abutting portion 360, and a top portion 362A of the arc surface 362 of the abutting portion 360 contacts with the bottom surface of the groove portion 340 in the closed position of the hook member 324.

As shown in Figs. 31A and 31B, when the hook member 324 is pressed from the closed position (reference position), the position of the top portion 362A of the arc surface 362 of the abutting portion 360 which contacts with the bottom surface of the groove portion 340 is shifted, and the gear member 344 is rotated around the shaft 334 by shifting of the arc surface 362 of the abutting portion 360. At this time, the damping gear 66 engaging with the gear portion 358 of the gear member 344 is also rotated.

As shown in Fig. 29, an abutting piece (a second abutting portion or a regulating portion) 364 extends from the gear portion 358 of the gear member 344. As shown in Fig. 31A, the abutting piece 364 may contacts with one end portion (the rotation center side) of the hook member 324 in the state that the hook member 324 is closed. Thereby, as described above, the movement of the hook member 324 in the opening direction is regulated to maintain the closed state of the hook member 324.

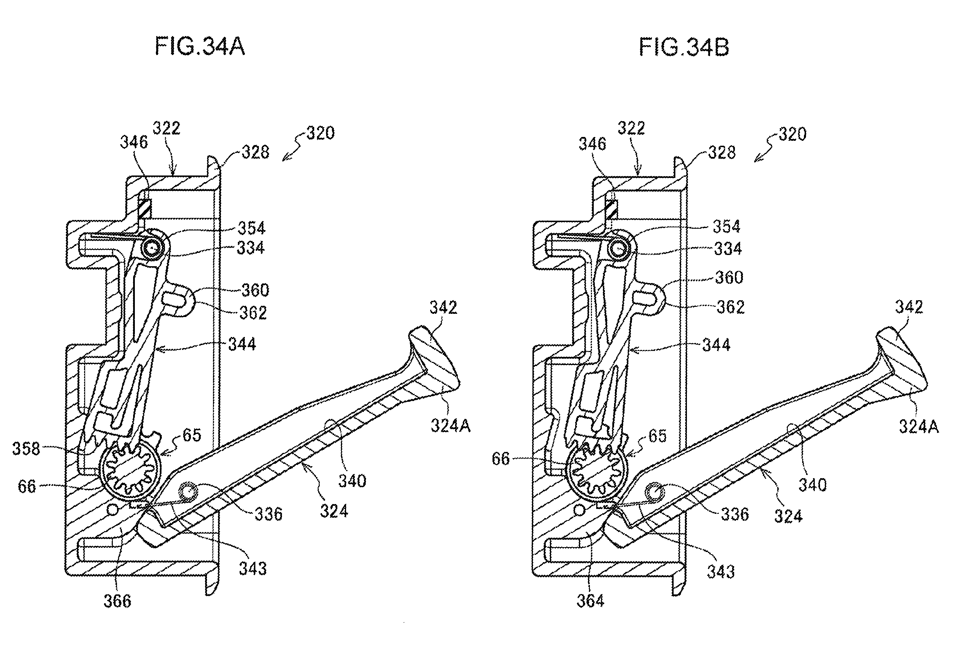

As shown in Fig. 34A (Fig. 34A is a sectional view taken along line 34A-34A of Fig. 28), one end portion of the hook member 324 may contacts with the attachment portion 366 of the case 322, whereby the movement in the opening direction of the hook member 324 is regulate.

Although not shown, the cushion rubber formed of a rubber member is fixed to the lower surface of the attachment portion 366. The opened hook member 324 may contact with the cushion rubber, and a shock at the time of abutment to the hook member 324 is absorbed by the cushion rubber.

### The description of the operation of the hook member

As shown in Figs. 31A and 32A, in the closed position (reference position) of the hook member 324, the abutting piece 364contacts with one end portion (rotation center side) of the hook member 324, and the abutting portion 360 contacts with the other end side (free end side) of the hook member 324.

The center of gravity of the hook member 324 is provided at an outer side of the case 322 from the position where the axial hole 338 is formed, and the hook member 324 is rotatable around the shaft 336 in the opening direction (the direction of the arrow A) in the closed position of the hook member 324. The abutting piece 364 contacts with the hook member 324 to regulate the movement of the hook member 324 in the opening direction, and the abutting portion 360 contacts with the hook member 324 to regulate the movement of the hook member 324 in the pushed-in direction. That is, the state that the hook member 324 is arranged in the closed position may be maintained by the abutting portions 360 and 364.

In addition, one end portion of the torsion coil spring 354 is attached to the gear member 344 to bias the gear member 344 in the direction of the arrow B (in the opposite direction of the direction of the arrow A). Thereby, the abutting portion 360 and the abutting piece 364 are reliably contacts with the hook member 324 to reliably regulate the movement of the hook member 324 in the opening direction.

Next, as shown in Figs. 31B and 32B, when the projecting portion 324A of the hook member 324 is pressed toward the pushed-in position (predetermined position) from the closed position of the hook member 324, the hook portion 342 contacts with the cushion rubber 346 and elastically deform the cushion rubber 346. Thereby, the biasing force is stored in the cushion rubber 346.

In addition, at this time, one end portion of the torsion coil spring 343 (the hook member 324 side) is slightly moved away from the other end portion of the torsion coil spring 343 (the attachment portion 366 of the case 322), and the biasing force is slightly stored in the torsion coil spring 343.

In addition, when the hook member 324 is moved to the pushed-in position (predetermined position), the position where the arc surface 362 of the abutting portion 360contacts with the bottom surface of the groove portion 340 is shifted. Thereby, the gear member 344 is rotated around the shaft 334, and the abutting piece 364 of the gear member 344 is moved away from the hook member 324. Accordingly, the movement regulation for the hook member 324 in the opening direction is released, and as shown in Figs. 33A and 34A, the hook member 324 may be moved in the opening direction.

In addition, when the gear member 344 is rotated, the torsion coil spring 354 is biased in the direction (in the opposite direction of the direction of the arrow A) against the biasing force (in the direction opening the hook member 324), and the biasing force is stored therein.

Here, as shown in Figs. 32A and 34A, the gear portion 358 of the gear member 344 engages with the damping gear 66. When the gear member 344 is rotated, the damping effect acts upon the gear member 344 by the viscous resistance of the damping gear 66. Then, by the viscous resistance of the damping gear 66, the movement of the gear member 344 is regulated up to a predetermined stress value. For this reason, the restoring force (biasing force) of the torsion coil spring 343 and the cushion rubber 346 acts upon the hook member 12 earlier than the restoring force (biasing force) of the torsion coil spring 354.

That is, by the rotating force of the hook member 324 by its own weight, the biasing force stored in the cushion rubber 346, and the biasing force stored in the torsion coil spring 343, as shown in Figs. 33A and 34A, the hook member 324 is rotated in the opening direction. Then, in the state that the hook member 324 is opened (in the open position of the hook member 324), clothing or the like may be caught on the hook portion 342.

In this exemplary embodiment, since the hook member 324 can rotate in the opening direction by its own weight, for the rotation of the hook member 324 in the opening direction, the biasing force of the cushion rubber 346 and the torsion coil spring 343 is not always necessary.

In the state of Fig. 34A, the torsion coil spring 354 is brought into the state that the biasing force in the direction closing the hook member 324 is stored. For this reason, by the biasing force of the torsion coil spring 354, as shown in Figs. 34A and 34B, the gear member 344 is gradually rotated around the shaft 334. Thereby, the damping gear 66 is rotated by the movement of the gear portion 358. For this reason, the damping effect of the damping gear 66 acts upon the gear member 344, so that the gear member 344 is moved slowly.

As shown in Figs. 33A and 33B, one end portion of the hook member 324 is arranged on a movement track of the abutting piece 364 of the gear member 344, and when the gear member 344 is rotated in the direction of the arrow B, the abutting piece 364 of the gear member 344 is abutted onto one end portion of the hook member 324.

When the gear member 344 is rotated from this state, the rotating force in the direction of the arrow C (the direction closing the hook member 324) acts around the shaft 336 upon the hook member 324 via the abutting piece 364 of the gear member 344 to bias the hook member 324 in the closing direction.

Thereby, the hook member 324 is rotated in the closing direction. At this time, as shown in Figs. 34B and 32A, the gear member 344 is also rotated around the shaft 334. For this reason, the damping gear 66 is rotated via the gear portion 358, the damping effect of the damping gear 66 acts upon the gear member 344, and the hook member 324 is rotated quietly.

As described above, the abutting piece 364 contacts with the end portion of the hook member 324 in the closed position of the hook member 324, and the abutting portion 360 contacts with the other end of the hook member 324, thereby regulating the movement of the hook member 324.

### The operation of the hook member

In this exemplary embodiment, the abutting portion 360 and the abutting piece 364 are provided to the gear member 344, and in the state that the hook member 324 is arranged in the closed position, the abutting portion 360 and the abutting piece 364 contact with the hook member 324, and the state that the hook member 324 is arranged in the closed position (reference position) may be maintained.

Then, the pressing force pressing the hook member 324 from the closed position to the pushed-in position (predetermined position) is transmitted to the gear member 344 via the abutting portion 360, so that the gear member 344 is rotated and the biasing force is stored in the torsion coil spring 354.

The pressing force to the hook member 324 is released, and after the hook member 324 is moved to the open position (projecting position), the gear member 344 is rotated by the biasing force of the torsion coil spring 354. The abutting piece 364 contacts with the hook member 324. The rotating force of the gear member 344 is transmitted to the hook member 324 by the abutting piece 364, so that the hook member 324 may be naturally returned to the closed position via the gear member 344.

When the gear member 344 is rotated, since the damping effect of the damping gear 66 acts upon the gear member 344 via the gear portion 358, the gear member 344 is moved quietly.

Note that, the abutting portion 360 is provided to the gear member 344 however, since it suffices that the pressing force pressing the hook member 324 may be transmitted to the gear member 344, the abutting portion 360 may be provided at the hook member 324.

The above embodiments are examples, and as such may be modified as appropriate provided they do not depart from the main purpose of the present invention. Thus, in the present embodiments, although a hook is used as a movable body, the movable body is not limited to a hook, as long as the movable body may move with respect to a case.

## Claims

1. An operational mechanism for a movable body, provided with a movable body (26, 324) that moves, with respect to a support (14, 44), between a reference position and a projecting position, and from the reference position to a predetermined position opposite the projecting position,
said operational mechanism comprising:
a rotating member (54, 344) rotably attached to the support (14, 44), the rotating member (54, 344) being rotated by the pushing of the movable body (26, 324) to the predetermined position;
a gear portion (56, 58, 68, 358) provided at the rotating member (54, 344), and a damping gear (66) that engages with the gear portion (56, 58, 68, 358) and that is provided at the support (14, 44); and a biasing member (32, 343); wherein due to pushing the movable body (26, 324) from the reference position to the predetermined position, a biasing force of the biasing member (32, 343) is stored,
**characterized in that** said operational mechanism further comprises a torsion coil spring (64, 354), one end of which is attached to the support (14, 44) and another end of which is attached to the rotating member (54, 344), which imparts a rotational force to the rotating member (54, 344),
wherein when the pushing is released, due to the biasing force of the biasing member, the movable body moves to the projecting position, and the movable body (26, 324) subsequently returns to the reference position due to the functions of the torsion coil spring (64, 354) and the gear portion (56, 58, 68, 358).

2. The operational mechanism for a movable body of claim 1, wherein, due to a biasing force direction switching mechanism including the biasing member (32, 343), the movable body (36, 324) moves to a projecting position, and when it arrives at the projecting position, it returns to a reference position.

3. The operational mechanism for a movable body of claim 2, wherein, after a fixed period of time after the movable body (26, 324) has arrived at the projecting position, the biasing direction of the biasing member (32, 343) is switched due to the biasing force direction switching mechanism.

4. The operational mechanism for a movable body of claim 2, wherein the biasing force direction switching mechanism comprises:
the rotating member (54, 344) that moves due to the operation of a rotating body (104, 300) which interlocks with the movable body (26, 324) or is integrated with the movable body (26, 324);
the biasing member (32, 343) provided between the rotating body (104, 300) and the rotating member (54, 344);
wherein,
by pushing the movable body (26, 324) from the reference position to the predetermined position, a virtual line, that connects the acting portions of the biasing force of the biasing member (32, 343), moves to a side opposite the center of rotation of the rotating body (104, 300), and thereby, the biasing direction of the rotating body (104, 300) is switched, and the movable body (26, 324) moves to the projecting position, after the movable body (26, 324) has moved to the projecting position, the biasing direction of the rotating body (104, 300) is switched by the virtual line moving again to a side opposite the center of rotation of the rotating body (104, 300).

5. The operational mechanism for a movable body of claim 4, wherein the rotating member (54, 3 44) comprises a small-diameter gear member that is acted upon by the rotating body (104, 300), and a large-diameter gear member (68), the movement of which is larger than the small-diameter gear member, that engages with the small-diameter gear member.

6. The operational mechanism for a movable body of claim 5, wherein the large-diameter gear member comprises a small-diameter gear provided at a center of rotation thereof that engages with the small-diameter gear member, and a large-diameter gear provided at an outer peripheral portion of the large-diameter gear member (68), wherein due to the large-diameter gear engaging with a damping gear (66), a biasing direction is switched after a fixed period of time after the movable body (26, 324) has arrived at a projecting position.

7. The operational mechanism for a movable body of claim 1, further comprising an engaging mechanism (216, 218, 222, 304, 308) that stops the movable body (26, 324) during advance movement thereof and releases the movable body (26, 324) in the event that the movable body (26, 324) is further moved in an advancing direction thereof.

8. The operational mechanism for a movable body of claim 1, further comprising an engaging mechanism that stops the movable body during return movement after advance movement thereof and releases the movable body(26, 324) in the event that the movable body (26, 324) is moved in an advancing direction thereof.

9. The mechanism for a movable body of claim 1, wherein the advance and return movements of the movable body (26, 324) are rotational movements.

10. The operational mechanism for a movable body of claim 7,
wherein the engaging mechanism (216, 304) comprises a cam groove formed in either one of the support (14, 44) or the rotating member (54, 344) and a pin member (218) supported by the other one of the support. (14, 44) or the rotating member (54,344), or the engaging mechanism comprises a cam groove in either one of the support (14, 44) or the movable body (26, 324) and a pin member (218) supported by the other one of the support or the movable body, and
the pin member is locked in a lock portion formed in the cam groove while the movable body (26, 324) is rotated, and in the event that the movable body (26, 324) is rotated in the advancing direction in this state, the locked state of the pin member in the lock portion is released.

11. The operational mechanism for a movable body of claim 8,
wherein the engaging mechanism comprises a cam groove (216, 304) formed in either one of the support (14, 44) or the rotating member (54,344) and a pin member (218) supported by the other one of the support (14, 44) or the rotating member (54, 344), or the engaging mechanism comprises a cam groove (216, 304) formed in either one of the support (14, 44) or the movable body (26, 324) and a pin member supported by the other one of the support or the movable body, and
the pin member is locked in a lock portion formed in the cam groove while the movable body is rotated, and in the event that the movable body is rotated in the advancing direction in this state, the locked state of the pin member in the lock portion is released.

12. The operational mechanism for a movable body of claim 1,
wherein after the movable body (26, 324) is moved to the projecting position, the rotating member (54, 344) is rotated by the biasing force of the biasing member (32, 343) and is abutted to the movable body (26, 324) to return the movable body to the reference position.

13. The operational mechanism for a movable body of claim 1, wherein a regulating portion (360, 364) is provided at one of the rotating member (54, 344) or the movable body (26, 324), and the regulating portion is abutted to the other one of the movable body (26, 324) or the rotating member (54, 344) in a state in which the movable body (26, 324) is arranged at the reference position so as to regulate the movement of the movable body (26, 324).

14. The operational mechanism for a movable body of claim 13,
wherein the regulating portion (360, 364) comprises:
a first abutting portion (360) that is provided at the rotating member (54, 344) and transmits to the rotating member (54, 344) a pressing force that is applied to the movable body (26, 324), the pressing force moving the movable body (26, 324) from the reference position to the predetermined position; and
a second abutting portion (364) that is provided at the rotating member (54, 344) and is abutted to the movable body (26, 324) that has been moved to the projecting position such that a rotating force of the rotating member (54, 344) is transmitted to the movable body (26, 324).

15. The operational mechanism for a movable body of claim 12, wherein a gear portion (56, 58,68, 358) is provided at the rotating member (54, 344), and a damping gear (66) that engages with the gear portion (56, 58, 68, 358) is provided at the support (14, 44).

## Patentansprüche

1. Betätigungsmechanismus für einen beweglichen Körper, versehen mit einem beweglichen Körper (26, 324), der sich relativ zu einer Halterung (14, 44) zwischen einer Basisposition und einer vorspringenden Position und aus der Basisposition in eine vorbestimmte Position, die der vorspringenden Position entgegengesetzt ist, bewegt, welcher Betätigungsmechanismus enthält:
ein Drehelement (54, 344), das drehbar an der Halterung (14, 44) angebracht ist, welches Drehelement (54, 344) gedreht wird, indem der bewegliche Körper (26, 324) in die vorbestimmte Position gedrückt wird;
einen an dem Drehelement (54, 354) vorgesehenen Zahnungsabschnitt (56, 58, 68, 358) sowie ein Dämpfungszahnrad (66), welches mit dem Zahnungsabschnitt (56, 58, 68, 358) in Eingriff steht und das an der Halterung (14, 44) vorgesehen ist; und
ein Vorspannelement (32, 343); wobei durch das Drücken des beweglichen Körpers (26, 324) aus der Basisposition in die vorbestimmte Position eine Vorspannkraft des Vorspannelements (32, 343) gespeichert wird,
**dadurch gekennzeichnet, dass** der Betätigungsmechanismus ferner eine Torsionsspiralfeder (64, 354) aufweist, deren eines Ende an der Halterung (14, 44) angebracht ist und deren anderes Ende an dem Drehelement (54, 344) angebracht ist, was dem Drehelement (54, 344) eine Drehkraft verleiht, wobei dann, wenn das Drücken gelöst wird, aufgrund der Vorspannkraft des Vorspannelements der bewegliche Körper sich in die vorspringende Position bewegt und der bewegliche Körper (26, 324) anschließend aufgrund der Funktion der Torsionsspiralfeder (64, 354) und des Zahnungsabschnitts (56, 58, 68, 358) in die Basisposition zurückkehrt.

2. Betätigungsmechanismus für einen beweglichen Körper nach Anspruch 1, bei welchem bedingt durch einen Vorspannkraftrichtung-Umschaltmechanismus, der das Vorspannelement (32, 343) umfasst, der bewegliche Körper (26, 324) sich in eine vorspringende Position bewegt, und dann, wenn er die vorspringende Position erreicht, in eine Basisposition zurückkehrt.

3. Betätigungsmechanismus für einen beweglichen Körper nach Anspruch 2, bei welchem nach einer festgelegten Zeitdauer, nachdem der bewegliche Körper (26, 324) an der vorspringenden Position angekommen ist, die Vorspannrichtung des Vorspannelements (32, 343) aufgrund des Vorspannkraftrichtung-Umschaltmechanismus umgeschaltet wird.

4. Betätigungsmechanismus für einen beweglichen Körper nach Anspruch 2, bei welchem der Vorspannkraftrichtung-Umschaltmechanismus enthält:
das Drehelement (54, 344), das sich aufgrund der Betätigung des Drehkörpers (104, 300) bewegt, welcher sich mit dem beweglichen Körper (26, 324) in Eingriff befindet oder in dem beweglichen Körper (26, 324) integriert ist;
das Vorspannelement (32, 343), welches zwischen dem Drehkörper (104, 300) und dem Drehelement (54, 344) vorgesehen ist;
wobei
durch Drücken des beweglichen Körpers (26, 324) aus der Basisposition in die vorbestimmte Position eine virtuelle Linie, welche die Wirkabschnitte der Vorspannkraft des Vorspannelements (32, 343) verbindet, sich zu einer Seite bewegt, die dem Drehmittelpunkt des Drehkörpers (104, 300) gegenüberliegt, und dadurch die Vorspannrichtung des Drehkörpers (104, 300) umgeschaltet wird und der bewegliche Körper (36, 324) sich in die vorspringende Position bewegt, und nachdem der bewegliche Körper (26, 324) sich in die vorspringende Position bewegt hat, die Vorspannrichtung des Drehkörpers (104, 300) umgeschaltet wird, indem sich die virtuelle Linie erneut auf eine Seite bewegt, die dem Drehmittelpunkt des Drehkörpers (104, 300) gegenüberliegt.

5. Betätigungsmechanismus für einen beweglichen Körper nach Anspruch 4, bei welchem der Drehkörper (54, 344) ein Zahnungselement mit kleinem Durchmesser aufweist, auf das der Drehkörper (104, 300) einwirkt, und ein Zahnungselement (68) mit großem Durchmesser, dessen Bewegung größer ist als die des Zahnungselements mit kleinem Durchmesser, welches mit dem Zahnungselement mit kleinem Durchmesser in Eingriff steht.

6. Betätigungsmechanismus für einen beweglichen Körper nach Anspruch 5, bei welchem das Zahnungselement mit großem Durchmesser ein Zahnrad mit kleinem Durchmesser aufweist, welches an seinem Drehmittelpunkt vorgesehen ist und mit dem Zahnungselement mit kleinem Durchmesser in Eingriff steht, und ein Zahnrad mit großem Durchmesser, das an einem äußeren Umfangsabschnitt des Zahnungselements (68) mit großem Durchmesser vorgesehen ist, wobei dadurch, dass das Zahnrad mit großem Durchmesser mit einem Dämpfungszahnrad (66) in Eingriff steht, eine Vorspannrichtung nach einer festgelegten Zeitdauer, nachdem der bewegliche Körper (26, 324) in einer vorspringenden Position angekommen ist, umgeschaltet wird.

7. Betätigungsmechanismus für einen beweglichen Körper nach Anspruch 1, ferner enthaltend einen Eingriffsmechanismus (216, 218, 222, 304, 308), welcher den beweglichen Körper (26, 324) während einer Vorwärtsbewegung desselben stoppt und den beweglichen Körper (26, 324) in dem Fall freigibt, dass der bewegliche Körper (26, 324) weiter in seiner Vorwärtsrichtung bewegt wird.

8. Betätigungsmechanismus für einen beweglichen Körper nach Anspruch 1, ferner enthaltend einen Eingriffsmechanismus, der den beweglichen Körper während einer Rückstellbewegung nach seiner Vorwärtsbewegung stoppt und den beweglichen Körper (26, 324) in dem Fall freigibt, dass der bewegliche Körper (26, 324) weiter in seiner Vorwärtsrichtung bewegt wird.

9. Betätigungsmechanismus für einen beweglichen Körper nach Anspruch 1, bei welchem die Vorwärts- und Rückstellbewegung des beweglichen Körpers (26, 324) Drehbewegungen sind.

10. Betätigungsmechanismus für einen beweglichen Körper nach Anspruch 7,
bei welchem der Eingriffsmechanismus (216, 304) eine Kurvennut, die entweder in der Halterung (14, 44) oder dem Drehelement (54, 344) gebildet ist, sowie ein Stiftelement (218) aufweist, das von dem jeweils anderen der Halterung (14, 44) oder des Drehelements (54, 344) gehalten ist, oder der Eingriffsmechanismus eine entweder in der Halterung (14, 44) oder dem beweglichen Körper (26, 324) gebildete Kurvennut und ein Stiftelement (218), das von dem jeweils anderen der Halterung oder des beweglichen Körpers gehalten ist, und
wobei das Stiftelement in einem in der Kurvennut gebildeten Verriegelungsabschnitt verriegelt ist, während der bewegliche Körper (26, 324) gedreht wird, und in dem Fall, dass der bewegliche Körper (26, 324) in diesem Zustand in der Vorwärtsrichtung gedreht wird, der verriegelte Zustand des Stiftelements in dem Verriegelungsabschnitt gelöst wird.

11. Betätigungsmechanismus für einen beweglichen Körper nach Anspruch 8,
bei welchem der Eingriffsmechanismus eine Kurvennut (216, 304), die entweder in der Halterung (14, 44) oder dem Drehelement (54, 344) gebildet ist, sowie ein Stiftelement (218) aufweist, das von dem jeweils anderen der Halterung (14, 44) oder des Drehelements (54, 344) gehalten ist, oder der Eingriffsmechanismus eine entweder in der Halterung (14, 44) oder dem beweglichen Körper (26, 324) gebildete Kurvennut (216, 304) und ein Stiftelement, das von dem jeweils anderen der Halterung oder des beweglichen Körpers gehalten ist, und
wobei das Stiftelement in einem in der Kurvennut gebildeten Verriegelungsabschnitt verriegelt ist, während der bewegliche Körper gedreht wird, und in dem Fall, dass der bewegliche Körper in diesem Zustand in der Vorwärtsrichtung gedreht wird, der verriegelte Zustand des Stiftelements in dem Verriegelungsabschnitt gelöst wird.

12. Betätigungsmechanismus für einen beweglichen Körper nach Anspruch 1,
bei welchem dann, nachdem der bewegliche Körper (26, 324) in die vorspringende Position bewegt wurde, das Drehelement (54, 344) durch die Vorspannkraft des Vorspannelements (32, 343) gedreht wird und an dem beweglichen Körper (26, 324) zur Anlage gebracht wird, um den beweglichen Körper in die Basisposition zurückzustellen.

13. Betätigungsmechanismus für einen beweglichen Körper nach Anspruch 1, bei welchem an entweder dem Drehelement (54, 344) oder dem beweglichen Körper (26, 324) ein Regulierabschnitt (360, 364) vorgesehen ist und der Regulierabschnitt an dem jeweils anderen des beweglichen Körpers (26, 324) oder des Drehelements (54, 354) in einem Zustand anliegt, in welchem der bewegliche Körper (26, 324) an der Basisposition angeordnet ist, um so die Bewegung des beweglichen Körpers (26, 324) zu regulieren.

14. Betätigungsmechanismus für einen beweglichen Körper nach Anspruch 13,
bei welchem der Regulierabschnitt (360, 364) enthält:
einen ersten Anschlagabschnitt (360), der an den Drehelement (54, 344) vorgesehen ist und eine Druckkraft auf das Drehelement (54, 344) überträgt, die an den beweglichen Körper (26, 324) angelegt wird, welche Druckkraft den beweglichen Körper (36, 324) aus der Basisposition in die vorbestimmte Position bewegt; und
einen zweiten Anschlagabschnitt (364), der an den Drehelement (54, 344) vorgesehen ist und an dem beweglichen Körper (26, 324) anliegt, der in die vorspringende Position bewegt wurde, so dass eine Drehkraft des Drehelements (54, 344) auf den beweglichen Körper (26, 324) übertragen wird.

15. Betätigungsmechanismus für einen beweglichen Körper nach Anspruch 12, bei welchem ein Zahnungsabschnitt (56, 58, 68, 358) an den Drehelement (54, 344) vorgesehen ist und ein Dämpfungszahnrad (66), welches mit dem Zahnungsabschnitt (56, 58, 68, 358) in Eingriff steht, an der Halterung (14, 44) vorgesehen ist.

## Revendications

1. Mécanisme fonctionnel destiné à un corps mobile, muni d'un corps mobile (26, 324) qui se déplace, par rapport à un support (14, 44) entre une position de référence et une position en saillie, et de la position de référence vers une position prédéterminée opposée à la position en saillie, ledit mécanisme fonctionnel comprenant:
un élément rotatif (54, 344) fixé pour tourner au support (14, 44), l'élément rotatif (54, 344) étant mis en rotation en poussant le corps mobile (26, 324) vers la position prédéterminée;
une partie d'engrenage (56, 58, 68, 358) fournie au niveau de l'élément rotatif (54, 344) et un engrenage amortisseur (66) qui s'engage sur la partie d'engrenage (56, 58, 68, 358) et qui est fourni au niveau du support (14, 44); et
un élément d'inclinaison (32, 343); dans lequel, à cause de la poussée exercée sur le corps mobile (26, 324) de la position de référence vers la position prédéterminée, une force d'inclinaison de l'élément d'inclinaison (32, 343) est stockée,
**caractérisé en ce que** ledit mécanisme fonctionnel comprend en outre un ressort à boudin de torsion (64, 354), dont une extrémité est fixée sur le support (14, 44) et dont une autre extrémité est fixée sur l'élément rotatif (54, 344) ce qui impartit une force de rotation à l'élément rotatif (54, 344),
dans lequel, lorsque la poussée est libérée, à cause de la force d'inclinaison de l'élément d'inclinaison, le corps mobile se déplace jusque dans la position en saillie, et le corps mobile (26, 324) retourne ensuite vers la position de référence du fait des fonctions du ressort à boudin de torsion (64, 354) et de la partie d'engrenage (56, 58, 68, 358).

2. Mécanisme fonctionnel destiné à un corps mobile selon la revendication 1, dans lequel, à cause d'un mécanisme de changement de direction de la force d'inclinaison incluant l'élément d'inclinaison (32, 343), le corps mobile (26, 324) se déplace vers une position en saillie, et lorsqu'il arrive dans la position en saillie, il retourne dans une position de référence.

3. Mécanisme fonctionnel destiné à un corps mobile selon la revendication 2, dans lequel, après un laps de temps fixé après que le corps mobile (26, 324) est arrivé au niveau de la position en saillie, la direction d'inclinaison de l'élément d'inclinaison (32, 343) est changée à cause du mécanisme de changement de la force d'inclinaison.

4. Mécanisme fonctionnel destiné à un corps mobile selon la revendication 2, dans lequel le mécanisme de changement dans la direction de la force d'inclinaison comprend:
l'élément rotatif (54, 344) qui se déplace du fait du fonctionnement d'un corps rotatif (104, 300) qui établit un verrouillage réciproque avec le corps mobile (26, 324) ou est intégré dans le corps mobile (26, 324);
l'élément d'inclinaison (32, 343) fourni entre le corps rotatif (104, 300) et l'élément rotatif (54, 344); dans lequel
grâce à la poussée exercée sur le corps mobile (26, 324) de la position de référence vers la position prédéterminée, une ligne virtuelle qui relie les parties agissantes de la force d'inclinaison de l'élément d'inclinaison (32, 343), se déplace vers un côté opposé au centre de rotation du corps rotatif (104, 300), et ainsi, la direction d'inclinaison du corps rotatif (104, 300) est changée, et le corps mobile (26, 324) se déplace vers la position en saillie, après que le corps mobile (26, 324) s'est déplacé vers la position en saillie, la direction d'inclinaison du corps rotatif (104, 300) est changée grâce à la ligne virtuelle qui se déplace à nouveau vers un côté opposé au centre de rotation du corps rotatif (104, 300).

5. Mécanisme fonctionnel destiné à un corps mobile selon la revendication 4, dans lequel l'élément rotatif (54, 344) comprend un élément d'engrenage à petit diamètre sur lequel le corps rotatif (104, 300) agit, et un élément d'engrenage à grand diamètre (68) dont le déplacement est plus important que l'élément d'engrenage à petit diamètre, qui s'engage sur l'élément d'engrenage à petit diamètre.

6. Mécanisme fonctionnel destiné à un corps mobile selon la revendication 5, dans lequel l'élément d'engrenage à grand diamètre comprend un engrenage à petit diamètre fourni au niveau d'un centre de rotation de celui-ci qui s'engage sur l'élément d'engrenage à petit diamètre, et un engrenage à grand diamètre fourni au niveau d'une partie périphérique extérieure de l'élément d'engrenage à grand diamètre (68), dans lequel, du fait que l'engrenage à grand diamètre s'engage sur un engrenage amortisseur (66), une direction d'inclinaison est changée après un laps de temps fixé après que le corps mobile (26, 324) est arrivé dans une position en saillie.

7. Mécanisme fonctionnel destiné à un corps mobile selon la revendication 1, comprenant en outre un mécanisme d'engagement (216, 218, 222, 304, 308) qui arrête le corps mobile (26, 324) pendant le déplacement en avant de celui-ci et libère le corps mobile (26, 324) dans le cas où le corps mobile (26, 324) se déplace en outre dans la direction en avant de celui-ci.

8. Mécanisme fonctionnel destiné à un corps mobile selon la revendication 1, comprenant en outre un mécanisme d'engagement qui arrête le corps mobile pendant le mouvement de retour après le déplacement en avant de celui-ci et libère le corps mobile (26, 324) dans le cas où le corps mobile (26, 324) se déplace dans une direction en avant de celui-ci.

9. Mécanisme fonctionnel destiné à un corps mobile selon la revendication 1, dans lequel les déplacements en avant et de retour du corps mobile (26, 324) sont des déplacements en rotation.

10. Mécanisme fonctionnel destiné à un corps mobile selon la revendication 7, dans lequel le mécanisme d'engagement (216, 304) comprend un chemin de came formé dans l'un ou l'autre du support (14, 44) ou de l'élément rotatif (54, 344), et un élément de goupille (218) supporté par l'autre du support (14, 44) ou de l'élément rotatif (54, 344), ou le mécanisme d'engagement comprend un chemin de came formé dans l'un ou l'autre du support (14, 44) ou du corps mobile (26, 324), et un élément de goupille (218) supporté par l'autre du support ou du corps mobile, et l'élément de goupille est verrouillé dans une partie de verrou formée dans le chemin de came alors que le corps mobile (26, 324) est mis en rotation, et dans le cas où le corps mobile (26, 324) est mis en rotation dans la direction d'avance, dans cet état, l'état verrouillé de l'élément de goupille dans la partie verrouillée est libéré.

11. Mécanisme fonctionnel destiné à un corps mobile selon la revendication 8, dans lequel le mécanisme d'engagement comprend un chemin de came (216, 304) formé dans l'un ou l'autre du support (14, 44) ou de l'élément rotatif (54, 344), et un élément de goupille (218) par l'autre du support (14, 44) ou de l'élément rotatif (54, 344), ou le mécanisme d'engagement comprend un chemin de came (216, 304) formé dans l'un ou l'autre du support (14, 44) ou du corps mobile (26, 324) et un élément de goupille supporté par l'autre du support ou du corps mobile, et
l'élément de goupille est bloqué dans une partie de verrou formée dans le chemin de came alors que le corps mobile est mis en rotation, et dans le cas où le corps mobile est mis en rotation dans la direction d'avance dans cet état, l'état verrouillé de l'élément de goupille dans la partie de verrou est libéré.

12. Mécanisme fonctionnel destiné à un corps mobile selon la revendication 1, dans lequel après que le corps mobile (26, 324) s'est déplacé vers la position de saillie, l'élément rotatif (54, 344) est mis en rotation par la force d'inclinaison de l'élément d'inclinaison (32, 343), et se met en butée contre le corps mobile (26, 324) pour renvoyer le corps mobile vers la position de référence.

13. Mécanisme fonctionnel destiné à un corps mobile selon la revendication 1, dans lequel une partie régulatrice (360, 364) est fournie au niveau de l'un de l'élément rotatif (54, 344) ou du corps mobile (26, 324), et la partie régulatrice se met en butée contre l'autre du corps mobile (26, 324) ou de l'élément rotatif (54, 344) dans un état dans lequel le corps mobile (26, 324) est agencé au niveau de la position de référence de manière à réguler le déplacement du corps mobile (26, 324).

14. Mécanisme fonctionnel destiné à un corps mobile selon la revendication 13,
dans lequel la partie régulatrice (360, 364) comprend:
une première partie en butée (360) qui est fournie au niveau de l'élément rotatif (54, 344) et transmet à l'élément rotatif (54, 344) une force de pression qui est appliquée au corps mobile (26, 324), la force de pression déplaçant le corps mobile (26, 324) de la position de référence jusque dans la position prédéterminée; et
une seconde partie en butée (364) qui est fournie au niveau de l'élément rotatif (54, 344) et est en butée contre le corps mobile (26, 324) qui a été déplacé vers la position de saillie de telle sorte qu'une force rotative de l'élément rotatif (54, 344) est transmise au corps mobile (26, 324).

15. Mécanisme fonctionnel destiné à un corps mobile selon la revendication 12, dans lequel une partie d'engrenage (56, 58, 68, 358) est fournie au niveau de l'élément rotatif (54, 344), et un engrenage amortisseur (66) qui s'engage sur la partie d'engrenage (56, 58, 68, 358) est fourni au niveau du support (14, 44).
